# EUROPEAN PATENT SPECIFICATION

(11) **EP 1 686 024 B1**
(45) Date of publication and mention of the grant of the patent: **30.05.2007**
(21) Application number: 06001347.1
(22) Date of filing: 23.01.2006
(51) Int. Cl.: B60R 25/00, G07C 9/00

(54) **Smart entry system for a vehicle, control method and computer program product therefor**
Intelligentes Fahrzeugzugangssystem, Steuerungsverfahren und dazugehöriges Computerprogramm
Système d'accès intelligent pour un véhicule, méthode de contrôle et programme informatique correspondant

(30) Priority: 31.01.2005 JP 2005023456; 03.02.2005 JP 2005027637
(43) Date of publication of application: 02.08.2006
(73) Proprietor: Mazda Motor Corporation, Aki-gun, Hiroshima 730-8670 (JP)
(72) Inventor: Yamashita, Takeharu c/o MAZDA MOTOR CORPORATION, Hiroshima (JP)
(74) Representative: Müller-Boré & Partner Patentanwälte

(56) References cited:
- EP-A- 1 367 200
- DE-A1- 10 300 573
- US-A1- 2004 046 449

## Description

The present invention relates to a smart entry system for a vehicle, to a control method therefor and to a computer program product therefor.

A so-called smart entry system (or called a smart key system) has been recently used for vehicles, especially, automotive vehicles, in which a door is locked and unlocked upon verification with ID signal transmitted by a portable device held by a passenger, for example, as disclosed in Japanese Patent Application Laid-Open No. 2003-269019. This system comprises the onboard transmitter (placed on the vehicle) to transmit the request signal, the onboard receiver (placed on the vehicle) to receive the ID signal, and the portable device to be held by the passenger, which comprises the receiver to receive the request signal and the transmitter to transmit the ID signal. When the request switch provided at the door handle is operated, for example, the request signal is transmitted by the onboard transmitter, the portable device receives the request signal and transmits the ID signal, verification is carried out with this ID signal, and finally the door is locked and unlocked upon this verification with ID signal. Also, other controls using the ID signal from the portable device, such as an engine starting control or a steering handle lock/unlocking, are known. A similar system can be seen in EP-A-1 367 200.

Meanwhile, some vehicles include a back door (lift gate) provided at a vehicle rear opening or a trunk lid for a trunk room, which has a latch mechanism without a lock mechanism. As disclosed in Japanese Patent Application Laid-Open No. 11-6341, the electromagnetic latch mechanism in which the door is electromagnetically latched and unlatched is also known. This type of mechanism can provide a preferable operation because the door is unlatched just by applying a small operational force to a door handle. Also, the lock mechanism provided at the trunk lid is known.

The door lock/unlock system using the portable device generally has some system-operational conditions regarding a location of the portable device in order to prevent the portable device from being locked up in the vehicle cabin. Namely, when the request switch is operated outside the vehicle, the request signal is transmitted both to inside and outside the vehicle so as to detect whether the request signal transmitted to inside the vehicle is received or the request signal transmitted to outside the vehicle is received. Thereby, it can be detected (determined) whether the portable device is located inside or outside the vehicle.

Herein, in the case where the electromagnetic latch mechanism using the above-described portable device is provided at a specified door, such as the back door (lift gate) or the trunk lid, when the specified door in its closed state is opened from the vehicle outside, the passenger operates the request switch from the vehicle outside and thereby the door is unlatched, and when the opened door is closed, the passenger closes the door and then operates the request switch again from the vehicle outside to latch the door.

Herein, the above-described door (especially, lift gate) has a relatively long length and the rear end tip of the opened (especially widely opened) door is at some distance from the vehicle body. Thus, when the door is closed, the driver needs to walk at some distance from the vehicle body for applying the closing force to the proper portion of the opened door. Herein, in the case where the door is a relatively big and heavy bag door, the closing force probably needs to be applied to the rear end tip of the opened bag door.

As described above, just after the specified door has been closed from the open state, the passenger needs to walk at some distance to approach the closed door for latching it. This would give the passenger some trouble. Also, if the passenger fails the operation to latch the door after closing the door because of this some trouble, this would bring a security problem.

The present invention has been devised in view of the above-described problems, and an object of the present invention is to provide the smart entry system, control method and computer program product for a vehicle that can perform the superior function without the above-described problems, especially the smart entry system comprising the portable device and the electromagnetic latch mechanism.

This object is solved by the features of the independent claims. Preferred embodiments of the present invention are subject of the dependent claims.

According to the present invention, there is provided a smart entry system for a vehicle, comprising a latch or locking mechanism provided at a specified (predetermined or predeterminable) door other than a driver-seat door, a request switch provided at or close to or corresponding to the specified door, an onboard transmitter operative to transmit a request signal when the request switch is operated, a portable device operative to transmit an ID signal when receiving the request signal, and an onboard receiver operative to receive the ID signal from the portable device, wherein when the specified door is closed, the latch mechanism is operated so as to unlatch the specified door upon verification with the ID signal received by the onboard receiver according to an operation of the request switch, and when the specified door is closed from an open state thereof, the latch mechanism is operated so as to latch the specified door whether the request switch is operated or not or the verification with the ID signal is confirmed or not.

Accordingly, when the passenger wants to open the closed door, the door can be easily unlatched just by operating the request switch from the outside of vehicle, without applying a large operation force to the door handle to unlatch the door. Meanwhile, when the passenger wants to close the door from its open state, the door can be latched whether the request switch is operated or not or the verification with the ID signal is confirmed or not. Thus, the latch/unlatch of the door can be done easily and promptly, so the operation of the door is improved. Also, the door can be latched surely, so the security is improved.

According to an embodiment of the present invention, the specified door is a back door to open and close a rear opening portion formed at a vehicle rear.

Accordingly, the preferable door according to the present invention can be provided.

According to another embodiment of the present invention, the smart entry system further comprises a lock mechanism to lock and unlock a door other than the specified door, a door request switch for the door that is different from the request switch provided at the specified door, wherein the lock mechanism is operated so as to lock and unlock the door upon verification with the ID signal.

Accordingly, there can be further provided the preferable lock/unlock of the door other than the specified door.

According to another embodiment of the present invention, the latch mechanism provided at the specified door is an electromagnetic latch mechanism, and the electromagnetic latch mechanism is controlled by the control device in such a manner that when the specified door is closed, the latch mechanism is operated so as to unlatch the specified door upon verification with the ID signal received by the onboard receiver according to the operation of the request switch, and when the specified door is closed from the open state thereof, the latch mechanism is operated so as to latch the specified door whether the request switch is operated or not or the verification with the ID signal is confirmed or not.

Accordingly, the above-described advantages of the present invention can be obtained by using the electromagnetic latch mechanism.

According to another embodiment of the present invention, the control device is configured so as to detect whether the portable device is located in a vehicle cabin or not by transmitting the request signal periodically to inside the vehicle and using the verification with the ID signal when the specified door is in the open state, and to operate the electromagnetic latch mechanism to latch the specified door when it is detected that the portable device is not located in the vehicle cabin.

Accordingly, the portable device can be prevented properly from being locked up in the vehicle cabin.

According to another embodiment of the present invention, the control device is configured so as to operate the electromagnetic latch mechanism to latch the specified door after an alarming when it is detected that the portable device is located in the vehicle cabin when the specified door is in the open state.

Accordingly, since the passenger is alarmed that the portable device is left in the cabin, the portable device can be surely prevented from being locked up in the cabin, and the proper security with the latch operation after alarming can be attained.

According to another embodiment of the present invention, the control device is configured so as to detect whether the portable device is located outside the vehicle or not by transmitting the request signal periodically to outside the vehicle and using the verification with the ID signal when the specified door is in the open state, and to operate the electromagnetic latch mechanism to latch the specified door when it is detected that the portable device is located outside the vehicle.

Accordingly, the portable device can be prevented properly from being locked up in the vehicle cabin.

According to another embodiment of the present invention, the control device is configured so as to operate the electromagnetic latch mechanism to latch the specified door after an alarming when it is not detected that the portable device is located outside the vehicle when the specified door is in the open state.

Accordingly, likewise the portable device can be surely prevented from being locked up in the cabin and the proper security can be attained.

According to another embodiment of the present invention, the onboard transmitter to transmit the request signal periodically to outside the vehicle when the specified door is in the open state is located at a specified portion that is not at but near the specified door.

Accordingly, the detection of the portable device as to whether or not it is located outside the vehicle and near the specified door can be surely conducted even when the specified door is in the open state.

According to another embodiment of the present invention, the operation of the request switch is configured so as to be a small displacement of a door handle provided at the specified door.

Accordingly, the passenger can open the specified door easily and smoothly by applying an operation force to open the door, just following the small displacement of the door handle to unlatch the door.

According to another embodiment of the present invention, the latch mechanism provided at the specified door is an electromagnetic latch mechanism, and the electromagnetic latch mechanism is controlled by the control device in such a manner that when the specified door is closed, the onboard transmitter transmits the request signal to inside and outside the vehicle when the request switch is operated and the latch mechanism is operated so as to unlatch the specified door upon verification with the ID signal received by the onboard receiver that is transmitted by the portable device only when responding to the request signal transmitted to outside the vehicle, when the specified door is closed from the open state thereof, the latch mechanism is operated so as to latch the specified door, and when the specified door is in a half-latched state, the electromagnetic latch mechanism is operated so as to unlatch the specified door according to the operation of the request switch without the verification with the ID signal.

Accordingly, since the specified door is unlatched basically only when the portable device is located outside the vehicle, the portable device can be prevented properly from being locked up in the vehicle cabin. Also, when the door is the half-latched state, the passenger generally tries to close the door after opening the door once. Herein, according to the above-described constitution, when the specified door is opened from the half-latched state, the door is unlatched just by the operation of the request switch without the verification with the ID signal. Thereby, the operation of specified door being closed after its opening can be conducted promptly.

According to another embodiment of the present invention, the electromagnetic latch mechanism is controlled by the control device in such a manner that the door-unlatch operation without the verification with the ID signal by the electromagnetic latch mechanism is prohibited when a specified time has passed after the specified door is latched.

Accordingly, the proper security can be provided.

According to another embodiment of the present invention, the latch mechanism provided at the specified door is an electromagnetic latch mechanism, and the electromagnetic latch mechanism is controlled by the control device in such a manner that when the specified door is closed, the onboard transmitter transmits the request signal to inside and outside the vehicle when the request switch is operated and the latch mechanism is operated so as to unlatch the specified door upon verification with the ID signal received by the onboard receiver that is transmitted by the portable device only when responding to the request signal transmitted to outside the vehicle, when the specified door is closed from the open state thereof, the latch mechanism is operated so as to latch the specified door, and when the specified door is in a half-latched state, the request signal transmitted by the onboard transmitter is changed such that a signal intensity thereof that is transmitted to inside the vehicle becomes weak and the electromagnetic latch mechanism is operated so as to unlatch the specified door upon verification with the ID signal received by the onboard receiver that is transmitted by the portable device only when responding to the request signal transmitted to outside the vehicle.

Accordingly, since the specified door is unlatched basically only when the portable device is located outside the vehicle, the portable device can be prevented properly from being locked up in the vehicle cabin. Also, when the door is the half-latched state, the detection error that the portable device located outside the vehicle is detected mistakenly to be in the vehicle cabin can be properly prevented by the simple way of reducing the signal intensity of the request signal transmitted to inside the vehicle. Thereby, the door can be closed again by being unlatched from its half-latched state. Also, since the door is unlatched upon verification with the ID signal even when the door is the half-latched state, the proper security can be provided as well.

According to another embodiment of the present invention, the latch mechanism provided at the specified door is the electromagnetic latch mechanism, and the electromagnetic latch mechanism is controlled by the control device in such a manner that when the specified door is closed, the onboard transmitter transmits the request signal to inside and outside the vehicle when the request switch is operated and the latch mechanism is operated so as to unlatch the specified door upon verification with the ID signal received by the onboard receiver that is transmitted by the portable device only when responding to the request signal transmitted to outside the vehicle, when the specified door is closed from the open state thereof, the latch mechanism is operated so as to latch the specified door, and when the specified door is in a half-latched state, a reception sensitivity of the onboard receiver is changed such that the reception sensitivity for the ID signal that is transmitted by the portable device when receiving the request signal that is transmitted to inside the vehicle becomes weak and the electromagnetic latch mechanism is operated so as to unlatch the specified door upon verification with the ID signal received by the onboard receiver that is transmitted by the portable device only when responding to the request signal transmitted to outside the vehicle.

Accordingly, since the specified door is unlatched basically only when the portable device is located outside the vehicle, the portable device can be prevented properly from being locked up in the vehicle cabin. Also, when the door is the half-latched state, the detection error that the portable device located outside the vehicle is detected mistakenly to be in the vehicle cabin can be properly prevented by the simple way of reducing the reception sensitivity of the onboard receiver. Thereby, the door can be closed again by being unlatched from its half-latched state. Also, since the door is unlatched upon verification with the ID signal even when the door is the half-latched state, the proper security can be provided as well.

According to another embodiment of the present invention, the latch mechanism provided at the specified door is the electromagnetic latch mechanism, and the electromagnetic latch mechanism is controlled by the control device in such a manner that when the specified door is closed, the onboard transmitter transmits the request signal to inside and outside the vehicle when the request switch is operated and the latch mechanism is operated so as to unlatch the specified door upon verification with the ID signal received by the onboard receiver that is transmitted by the portable device only when responding to the request signal transmitted to outside the vehicle, when the specified door is closed from the open state thereof, the latch mechanism is operated so as to latch the specified door, and when the specified door is in a half-latched state, the onboard transmitter transmits the request signal to inside and outside the vehicle when the request switch is operated and the latch mechanism is operated so as to unlatch the specified door upon verification with the ID signal received by the onboard receiver that is transmitted by the portable device when responding to at least the request signal transmitted to outside the vehicle.

Accordingly, since the specified door is unlatched basically only when the portable device is located outside the vehicle, the portable device can be prevented properly from being locked up in the vehicle cabin. Also, when the door is the half-latched state, the door is unlatched at least with conditions of the detection that the portable device is located outside the vehicle. Thereby, the door can be closed again by being unlatched from its half-latched state. Also, since the door is unlatched upon verification with the ID signal even when the door is the half-latched state, the proper security can be provided as well.

According to the invention, there is further provided a control method for a smart entry system for a vehicle, in particular according to the invention or a preferred embodiment thereof, having a latch mechanism provided at a specified door other than a driver-seat door, the control method comprising the following steps:
transmitting a request signal when a request switch provided at the specified door is operated by means of an onboard transmitter;
transmitting an ID signal when receiving the request signal by means of a portable device; and
receiving the ID signal from the portable device by means of an onboard receiver,
wherein when said specified door is closed, said latch mechanism is operated so as to unlatch the specified door upon verification with the ID signal received by said onboard receiver according to an operation of said request switch, and when the specified door is closed from an open state thereof, said latch mechanism is operated so as to latch the specified door whether said request switch is operated or not or the verification with said ID signal is confirmed or not.

According to the invention, there is still further provided a computer program product, in particular stored on a computer readable storage medium, comprising computer readable instructions which, when loaded and run on a suitable system perform the method according to the invention or a preferred embodiment thereof.

Other features, aspects, and advantages of the present invention will become apparent from the following description which refers to the accompanying drawings
FIG. 1 is a plan view showing a vehicle equipped with the present invention, along with a transmission area of a request signal.
FIG. 2 is a rear view of the vehicle shown in FIG. 1.
FIG. 3 is a side view of a vehicle rear with a lift gate fully closed.
FIG. 4 is a side view of the vehicle rear with the lift gate fully opened.
FIG. 5 is a side view of the vehicle rear with the lift gate slightly opened, which shows substantially a half-latched state of the lift gate.
FIG. 6 is a block diagram showing an exemplified control system on a onboard side and a portable-devise side.
FIG. 7 is a perspective view showing a major part of an exemplified door handle for a side door, along with the request switch.
FIG. 8 is a perspective view showing a major part of an IG switch, along with a steering lock mechanism.
FIG. 9 is a flowchart showing an exemplified control of a onboard control unit.
FIG. 10 is a flowchart showing an exemplified control of a control unit of a portable device.
FIG. 11 is a flowchart showing details of step P1 of FIG. 9.
FIG. 12 is a flowchart showing details of step Q1 of FIG. 10.
FIG. 13 is a flowchart showing details of step P2 of FIG. 9.
FIG. 14 is a flowchart showing details of step Q2 of FIG. 10.
FIG. 15 is a flowchart showing details of step P47 of FIG. 13.
FIG. 16 is a flowchart showing details of step Q47 of FIG. 13.
FIG. 17 is a flowchart showing details of step Q35 of FIG. 14.
FIG. 18 is a flowchart showing details of step P4 of FIG. 9.
FIG. 19 is a flowchart showing details of step P3 of FIG. 9.
FIG. 20 is a flowchart showing details of step P2 of FIG. 9, according to another embodiment.
FIG. 21 is a flowchart showing details of step Q2 of FIG. 10, according to another embodiment.
FIG. 22 is a flowchart showing details of step P48 of FIG. 20.
FIG. 23 is a flowchart showing details of step P48 of FIG. 20, according to another exemplified control.
FIG. 24 is a flowchart showing details of step Q36 of FIG. 21.
FIG. 25 is a flowchart showing details of step P48 of FIG. 20, according to further another exemplified control.

Hereinafter, preferred embodiments will be described referring to the accompanied drawings. It should be understood that even though embodiments are separately described, single features thereof may be combined to additional embodiments.

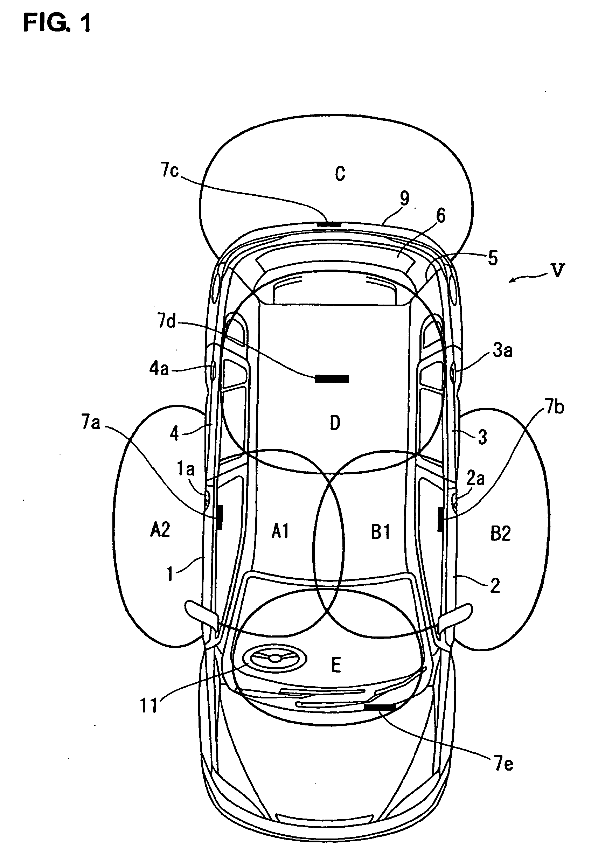

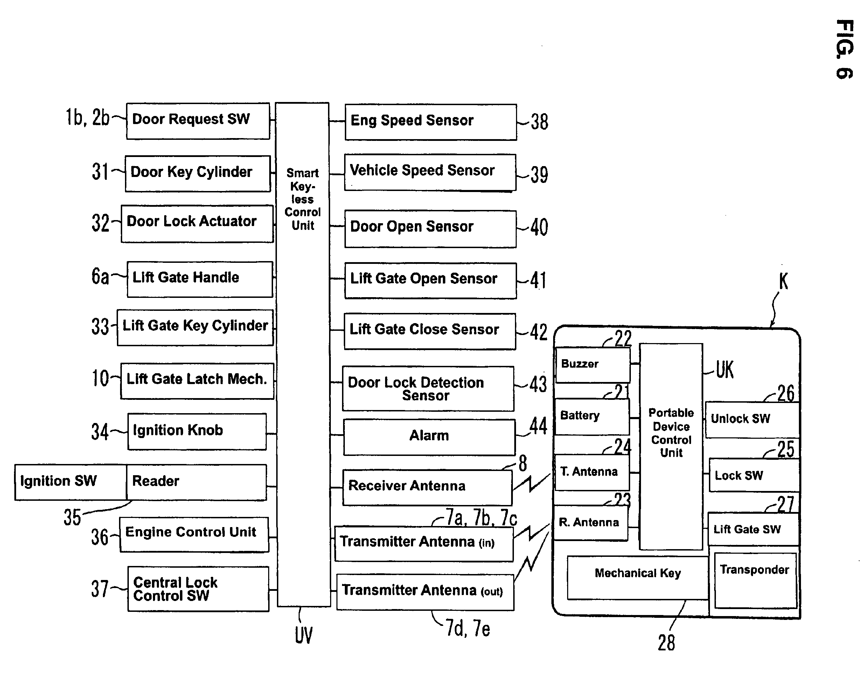

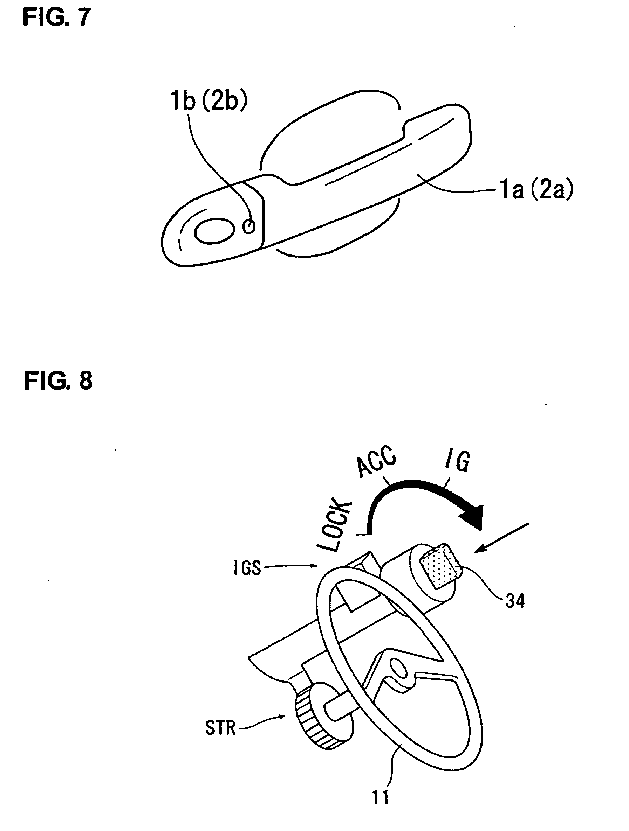

In FIG. 1, a vehicle V includes side doors comprising a driver-seat door 1, an assistant-seat door 2 and one or more, preferably a pair of rear-seat doors 3, 4. These doors 1 through 4 preferably are a rear-side opening type of door. Respective door handles of the doors 1 through 4 are denoted by reference characters 1a through 4a. The vehicle V comprises preferably at or near the door handles 1 a, 2a one or more request switches 1b, 2b for locking/unlocking respective door(s) using ID signals which will be described below (see FIGS. 6 and 7). Herein, the request switch may be tuned ON e.g. by a slightly-pushing operation.

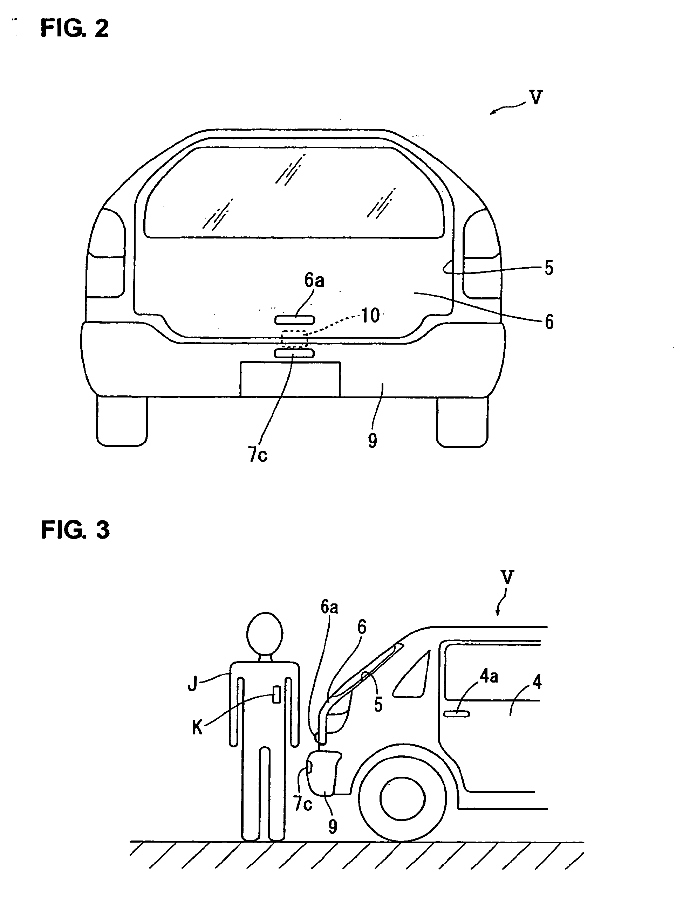

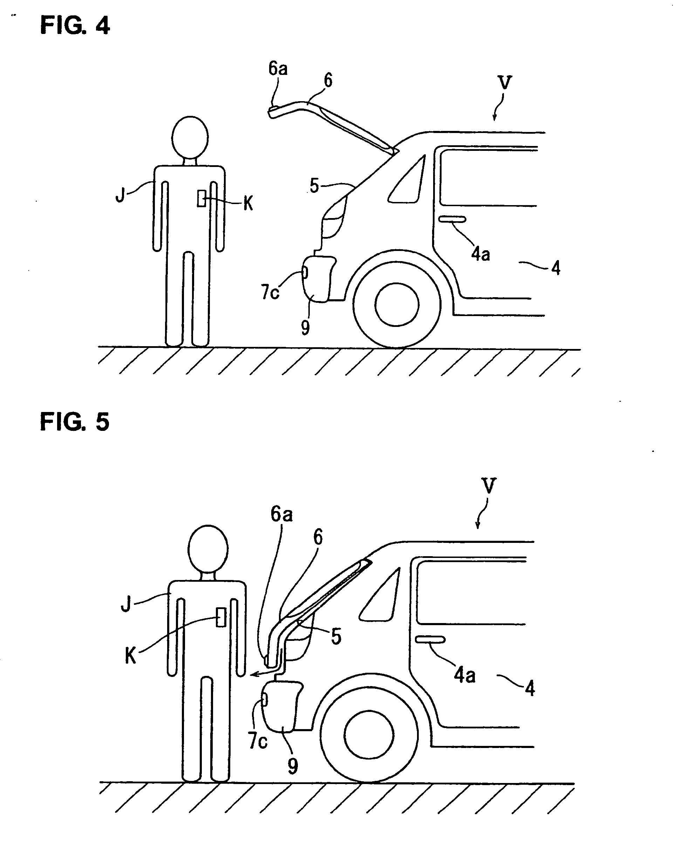

As shown in FIGS. 2 through 5, the vehicle V has a rear opening 5 formed at the vehicle rear, which is closed and opened preferably by a lift gate 6 as a back door. The lift gate 6 is a lower-side opening type of door in the present embodiment. Its closed state is shown in FIG. 3, its opened state is shown in FIG. 4, and its slightly opened state is shown in FIG. 5. A door handle of the lift gate 6, denoted by a reference character 6a in FIG. 2, is provided at or near an opening-side end portion so as to easily open a relatively heavy lift gate. The door handle 6a is configured so as to function as the request switch as well, which transmits a request signal for unlatching the lift gate by using ID signal from a portable device K. Herein, the door handle 6a is configured so as to be operated slightly in the opening direction, and this small displacement of a door handle is an operation for the above-described request signal. In FIGS. 3 through 5, reference characters J and K respectively denote a passenger and a portable device held by the passenger, which will be described in detail later.

Herein, the half-latched state means a state where the door is half opened, in which the door is not fully latched, so the door is in a shaky state. The half-latched state of the lift gate may be detected by using a close-detecting switch that is to provide ON signal when the lift gate 6 is closed (fully closed) and an open-detecting switch that is to provide ON signal when the lift gate 6 is opened slightly through fully. Herein, when both these switches do not provide the ON signals, it is preferably detected that the lift gate is in the half-latched state at this moment. The detection of the half-latched state is not limited to this, but any other ways may alternatively or additionally be adopted. For example, it may be detected by a sensor to continuously or stepwise detect a position of a specified (predetermined or predeterminable) member that is mechanically linked to the latch.

Each of the side doors 1 through 4 has a latch mechanism that is or may be manually operated by the door handle and a lock mechanism to lock/unlock the latch mechanism. Namely, when the doors 1 through 4 in the closed state are opened, the unlock operation is done first and then the door handles 1 a through 4a are operated by the driver so as to latch the doors. Also, when the doors 1 through 4 in the open state are closed, the doors are mechanically latched. The lock/unlock of the doors 1 through 4 are preferably done with a mechanical key 28 (see FIG. 6) of the portable device K and the ID signal that is transmitted by the portable device K. When the request switches 1b, 2b of the door handles 1 a, 2a for the front seats are operated to request the transmission of the ID signal from the portable device K, the request signal is transmitted. Herein, the lock/unlock operation is not done directly for the rear-set doors 3, 4. For example, that may be linked to the lock/unlock of the driver-seat door 1. However, respective request switches may be provided at the respective doors 1 through 4. Also, the doors 1 through 4 can or may be locked or unlocked at the same time by operating a central lock control switch 37 (see FIG. 6) located in the vehicle cabin.

Meanwhile, the lift gate 6 includes a (preferably electromagnetic) latch mechanism 10 (see FIG. 2), and preferably no lock mechanism is provided at the lift gate 6. This electromagnetic latch mechanism 10 performs the unlatch operation that the lift gate 6 is unlatched by using the ID signal transmitted by the portable device K, and the automatic latch operation that is done just by closing the lift gate 6. Further, the electromagnetic latch mechanism 10 can be operated such that the lift gate 6 is unlatched by an operational switch that is operated from the inside of the vehicle and also the lift gate 6 is latched and unlatched by a manual operation of the mechanical key 28 (see FIG. 6) of the portable device K. When the door handle 6a is operated slightly toward the opening direction, this small displacement of the door handle 6a preferably provides the operation to request the request signal for the lift gate 6. Thereby, the request signal is transmitted. Herein, the door handle 6a preferably is provided only for the generating request signal, so even if the door handle 6a is operated with the large operating force, the lift gate 6 is not unlatched by that (the large displacement for unlatch operation is not available). The control for latch/unlatch operations of the lift gate 6 will be described in detail below.

The vehicle V has one or more, e.g. five onboard transmitters (transmitting antennas) 7a through 7e and at least one onboard receiver (receiving antenna) 8 for the portable device K. The onboard transmitters 7a through 7e transmit the request signals, which will be described in detail below, with a specified (predetermined or predeterminable) transmission area. The transmission area of the onboard transmitter 7a preferably can be switched between an area A1 and an area A2 by its transmission mode selection. The area A1 is located in the cabin near or at least partly corresponding to the driver seat, and the area A2 is located outside the vehicle beside or close to the driver seat or the door corresponding to the driver seat. Also, the transmission area of the onboard transmitter 7b preferably can be switched between an area B1 and an area B2 by its transmission mode selection. Likewise, the area B1 is located in the cabin near or at least partly corresponding to the assistant seat, and the area B2 is located outside the vehicle beside the assistant seat or the door corresponding to the assistant seat.

A transmission area C of the onboard transmitter 7c that is provided at or close to (preferably the center of) a rear bumper 9 is located substantially behind the closed lift gate 6. A transmission area D of the onboard transmitter 7d preferably is located behind the driver and/or assistant seats in the cabin. A transmission area E of the onboard transmitter 7e is located in front of the driver and/or assistant seats in the cabin.

A whole area of the cabin is substantially covered by the areas A1, B1, D and E, wherein the areas A1, A2, B1, B2, C and/or D may at least partly overlap with respect to each other (see e.g. FIG. 1). The onboard receiver 8 can receive the ID signal transmitted by the portable device K that is located preferably in the substantially whole areas of A through E.

The exiting location of the portable device K can be detected by using these transmission areas. For example, the request signal is transmitted for each area of these areas A1, B1, D and E in order with a time deference. Namely, within a certain period of time from a point when a specified (predetermined or predeterminable) request signal is transmitted for a specified (predetermined or predeterminable) area to a subsequent point when the next request signal is transmitted for the next (different) area, it is detected whether the ID signal transmitted by the portable device K exists or not. When the ID signal transmitted by the portable device K is received between this certain period of time, the portable device K can be detected to be located in that transmission area where the request signal has been just transmitted. This can be applied to the transmission area located outside the vehicle, and thus it can be detected where the portable device K is located in all transmission areas described above.

When the door, for example, the lift gate 6 is opened, there is a possibility that there exists interference between the transmission area located inside the vehicle and the transmission area located outside the vehicle. Namely, the area D may be expanded rearward behind the vehicle, or the area C may be expanded into the vehicle cabin. This interference might occur even if the lift gate 6 is in the half-latched state. The detection of the portable device K existing location that will be described below is designed tanking account of this interference.

The vehicle V is equipped with a control unit UV as a control device, which comprises a microcomputer including CPU and other parts preferably as shown in FIG. 6. The portable device K, which has a wireless communication with the control unit UV, comprises a control unit UK that also comprises a microcomputer including CPU and other parts, which is well known. This portable device K preferably is a compact card-sized device so as to be accommodated e.g. in a breast pocket, wallet or the like of the passenger. The portable device K comprises a battery 21 as a preferred electrical source, a buzzer 22 as an alarm, a receiving antenna 23 to receive the request signal, a transmitting antenna 24 to transmit the ID signal, one or more lock and unlock switches 25, 26 for the doors 1 through 4 to be operated manually by the passenger, a lift gate switch 27 to provide the unlatch request of the lift gate 6, and/or the mechanical switch 28. The mechanical switch 28 preferably has a transponder stored at its operational portion, whereby the verification on the vehicle side can be executed at the lock (latch), unlock (unlatch), engine starting or the like (the ID signal preferably contains a verification code (such as a password)).

To the control unit UV at the vehicle V are connected one or more of the following components: one or more door key cylinders 32 provided at the side doors 1, 2 (for using the mechanical key 28); one or more actuators 32 provided at the side doors 1 - 4 to electromagnetically lock/unlock these doors respectively; a key cylinder 33 for the lift gate 6 (for using the mechanical key 28); an ignition knob 34 to be manually operated at the ignition switch; a reader 35 to conduct verification of the transponder of the mechanical key 28; a control unit 36 to control the engine such as the fuel injection and the ignition timing; a central lock switch 37 to be (preferably manually) operated to lock/unlock the side doors 1 - 4 at the same time; an engine speed sensor 38; a vehicle speed sensor 39; opening-state detecting switches 40 to be provided at the side doors 1 - 4 respectively; a switch 41 to detect the lift, gate 6 in the open state; a switch 42 to detect the lift gate 6 in the closed state; and/or one or more switches 43 provided at the side doors 1 - 4 to detect the lock respectively. A reference character 44 denotes either one of a meter provided at an instrument panel (e.g. for alarming by lamp), a buzzer (e.g. for alarming by sound), a voice guide (e.g. for voice alarming including alarm contents), a lamp located outside the vehicle body (e.g. for visual alarming, for example, by flashing a turn-signal lamp) or combination of some of these.

FIG. 8 shows the ignition switch portion along with the steering lock portion. Herein, by pushing and/or rotating the ignition knob 34 in the lock position in one direction, e.g. clockwise in FIG. 8, this takes in order positions of ACC position (accessory position to enable operations of audio devices etc.), IG position (position to enable engine's continuous operation), and IG starter position (position to start engine by the starter motor). The mechanical key 28 is set to be available by pulling the ignition knob 34 to this side and taking it off (a key hole of the key cylinder is exposed). In the above-described lock position, the electromagnetic steering lock mechanism STR is operated and thereby the steering handle 11 can be locked (see FIG. 11).

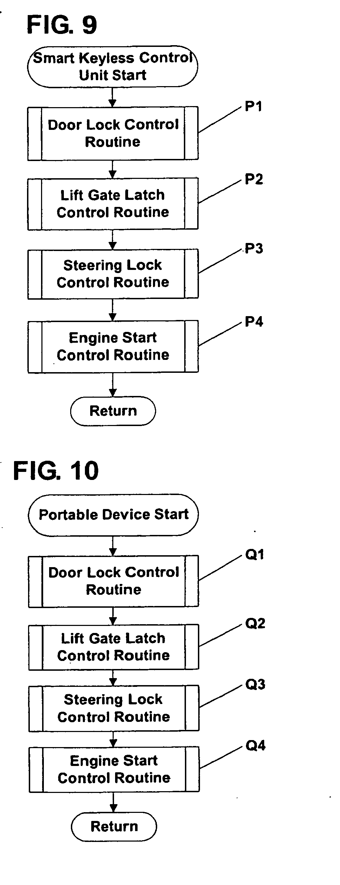

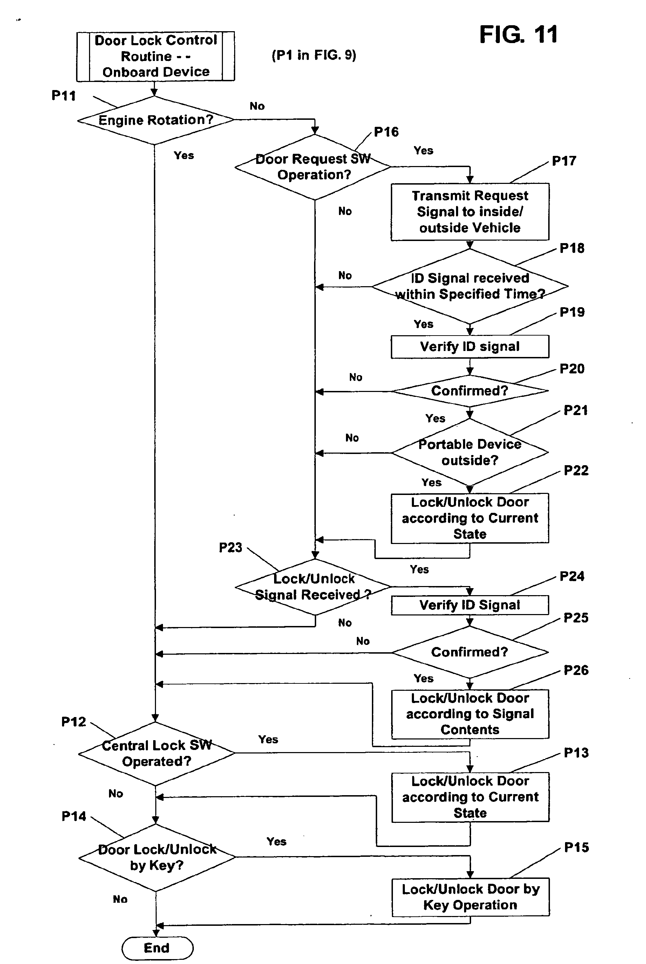

Next, the respective controls using the portable device K will be described referring to the flowchart of FIG. 9 and the subsequent figures. Herein, steps P and G are respectively for a control of the control unit UV on the vehicle side and a control of the control unit UK on the side of the portable device K.

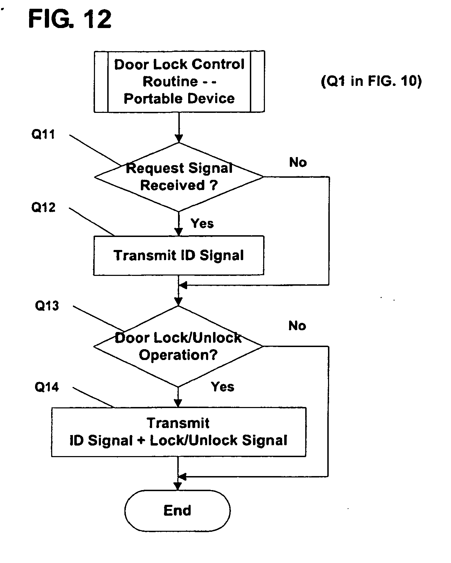

First, FIG. 9 is a main routine of the control unit UV on the vehicle side, and FIG. 10 is a main routine of the control unit UK on the side of the portable device K, which corresponds to FIG. 9. Namely, step P1 corresponds to step Q1, step P2 corresponds to step Q2, step P3 corresponds to step Q3, and step P4 corresponds to step Q4.

The step P1 in FIG. 9 (the step Q1 in FIG. 10) will be described referring to FIGS. 11, 12. First, it is determined whether the engine speed occurs or not in step P11 in FIG. 11. When the determination is YES in the step P11, it is determined whether the central lock switch 37 is operated or not in step P12. When the determination is YES in the step P12, the doors 1-4 are respectively unlocked if these are in the locked state or locked if these are in the unlocked state in step P13. After the step P13 or when the determination is NO in the step P12, it is determined whether the lock/unlock operation by the mechanical key 28 is done or not in step P14. When the determination is YES in the step P14, the doors 1 - 4 are respectively locked or unlocked according to the operation of the mechanical key 28 in step P15. After the step P15 or when the determination is NO in the step P14, the control sequence returns.

When the determination is NO in the step P11, it is determined whether (preferably any one of) the request switches 1b, 2b provided at the door handles 1a, 2a of the doors 1, 2 are operated or not. When the determination is YES in step P16, the request signals are transmitted to inside and/or outside the vehicle in step P17 (preferably the transmission areas A1, A2, B1, B2, D and/or E). Then, it is determined in step P18 whether or not the ID signal is received within the specified (predetermined or predeterminable) period of time from the transmission of the request signal. Herein, according to the step P17, when the portable device K is located any one of the transmission areas A1, A2, B1, B2, D and/or E, the portable device K receives the request signal and then outputs the ID signal as a response signal (steps Q11, Q12 in FIG. 12).

When the determination is YES in the step P18, verification of the received ID signal preferably with the vehicle identification code (password) that has been stored and/or generated is conducted. After the step P19, it is determined whether the verification is confirmed or not in step P20. When the determination is YES in the step P20, it is determined whether the portable device K is located outside the vehicle or not in step P21. Herein, for example, when the portable device K receives the ID signal in the case the areas A2, B2 are set to be the transmission area by switching the transmission area between the vehicle-outside areas A2, B2 and the vehicle-inside areas A1, B1 in the processing of the step P17, it can be determined that the portable device K is located outside the vehicle. Conversely, when it receives the ID signal in the case the areas A1, B1 are set to be the transmission area, it can be determined that the portable device K is located inside the vehicle. When the determination is YES in the step P21, namely when the portable device K is located outside the vehicle, the doors 1, 2 are locked or unlocked according to the current state in step P22. Namely, when they are in the locked state, they are changed to the unlocked state, and when they are in the unlocked state, they are changed to the locked state.

Then after the step P22, when the determination is NO respectively in the steps P16, P18, P20 and P21, it is determined whether the lock or unlock signals from the portable device K is received or not in step P23. Namely, when the unlock switch 26 or the lock switch 25 of the portable device K are operated, the signals are transmitted from the portable device K according to these operations (steps Q13, Q14 in FIG. 10). Thus, the determination as to whether those signals are received or not is made. When the determination is YES in the step P23, the processing of steps P24, P25 are conducted (substantially corresponding to processing of the steps P19, P20). Then, when it is determined that the verification is confirmed in the step P25, the doors 1, 2 are locked or unlocked according to the signal contents from the portable device K in step P26. After the step P26, when the determination is NO in the steps 23 or 25, the control sequence proceeds to the above-described step P12.

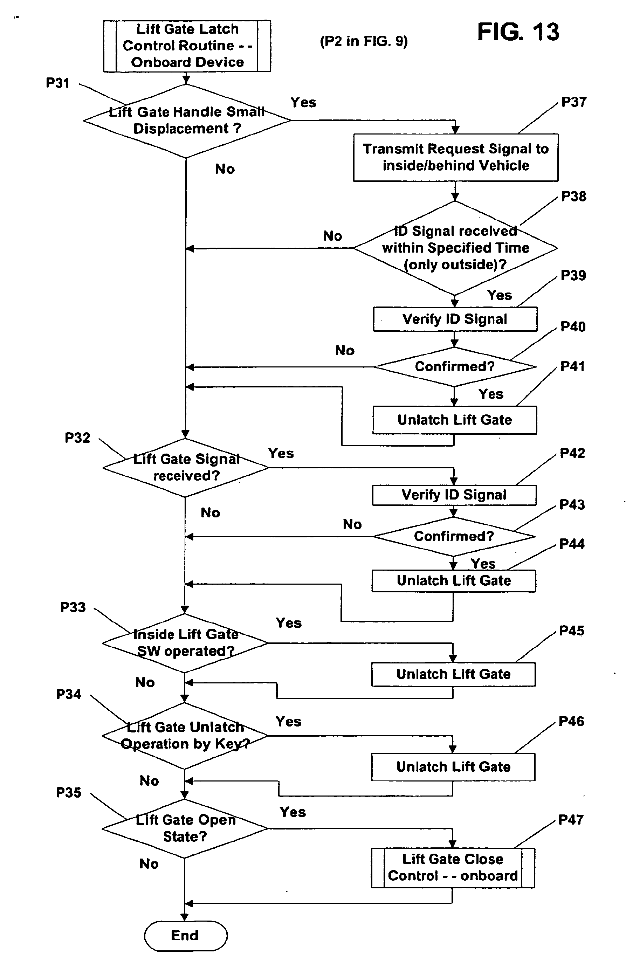

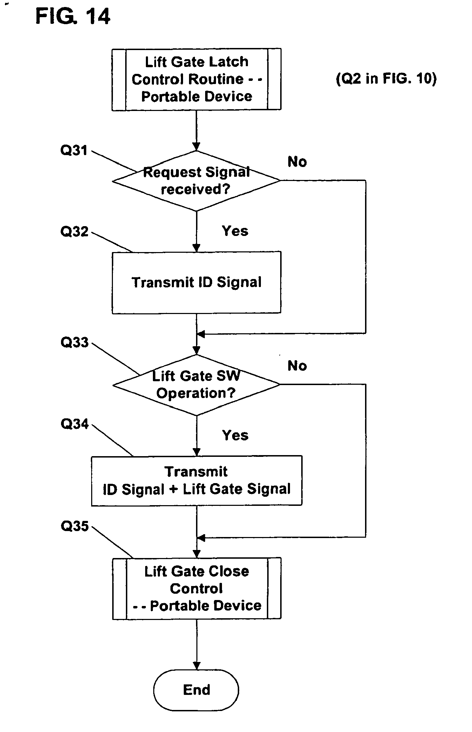

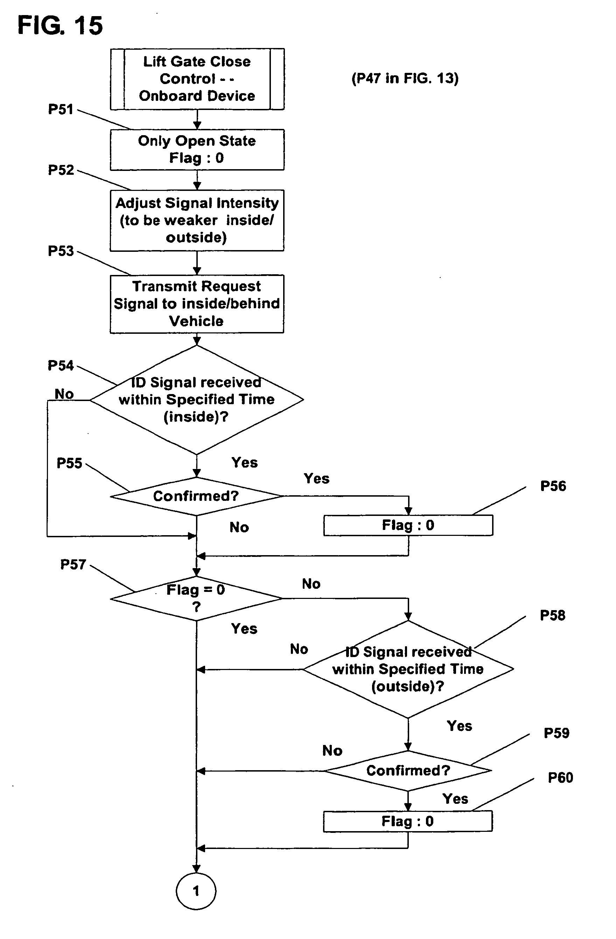

Next, the details of the step P2 in FIG. 9 (the step Q2 in FIG. 10) will be described referring to FIGS. 13 and 14. First, it is determined whether the small displacement of the lift gate handle 6a occurs or has occurred or not, i.e., whether it is requested to generate the request signal for the lift gate 6 or not, in the step P31 in FIG. 13 that shows the control content at the vehicle side. When the determination is NO in step P31, it is determined whether the portable device K transmits the unlatch request signal of the lift gate 6 or not in step P32. Namely, since the portable device K transmits the ID signal and the lift gate signal according to the operation of the lift gate switch 27 of the portable device K (processing of step Q33, Q34 in FIG. 14), the determination as to whether these signals are received or not is made. When the determination is NO in the step P32, preferably it is determined whether the switch 41 located in the cabin to request the unlatch of the lift gate 6 (FIG. 6) is operated or not in step P33. When the determination is NO in the step P33, preferably it is determined whether the unlatch operation of the lift gate 6 by the mechanical key 28 of the portable device K is done or not in step P34. When the determination is NO in the step P34, it is determined whether the lift gate 6 is in the open state or not in step 35. When the determination is NO in the step P31, the control ends.

When the determination is YES in the step P31, i.e., when it is determined that the small displacement of the lift gate handle 6a occurs, the request signals are transmitted to inside and/or behind the vehicle (preferably the transmission areas A1, B1, C, D and/or E) in step P37. Then, it is determined in step P38 whether the ID signal is received within a specified period of time after the request signal is transmitted. Namely, in the case where the portable device K is located in the above-described transmission areas, the portable device K transmits the ID signal (processing of steps Q31). Also, the determination in the step P38 is made including the signal from the portable device K that is located in the rear transmission area C. When the determination is YES in the step P38, i.e., the ID signal is received and the portable device K is located in the transmission area C, the processing of P39, P40 are done. When the determination is YES in step P40, namely when the verification is confirmed, the lift gate 6 (preferably the electromagnetic latch mechanism 10) is unlatched in step P41. Thus, the passenger preferably can open the lift gate 6 upward easily just by holding and lifting up the lift gate handle 6a. When the determination is NO in the steps P38 or P40, the control sequence proceeds to the step P32 without the unlatch operation of the lift gate.

When the determination is YES in the step P32, i.e., the ID signal and the unlatch request signal are received according the operation of the lift gate switch 27 of the portable device K (substantially corresponding to processing of steps Q33, Q34 in FIG. 14), processing of P42 through P44 are conducted. Namely, when the ID signal verification is conducted in step P42 and it is determined whether the verification is confirmed in step S43, the lift gate 6 is unlatched in step P44. Herein, when the determination is NO in the step P43 and thus the verification is not confirmed, the control sequence proceeds to the step P33 without of the unlatch operation.

When the determination is YES in the step P33, i.e., the switch provided in the cabin is tuned ON to unlatch the lift gate 6, the lift gate 6 is unlatched in step 45 and then the control moves on to the step P34. When the unlatch operation by the mechanical key 28 is conducted and thus the determination is YES in the step P31, the lift gate 6 is unlatched in step 46 and then the control moves on to step P35. Herein, in the case of the unlatch using the mechanical key 28, the direct unlatch with the mechanical operation (displacement) of the mechanical key 28 may be adopted.

When the determination is YES in the step P35, namely, the lift gate is in the open state, processing for making the lift gate 6 in the closed state is conducted in step P47 (corresponding to processing of Q35 in FIG. 14 on the side of the portable device K), which will be described below. Then the control ends.

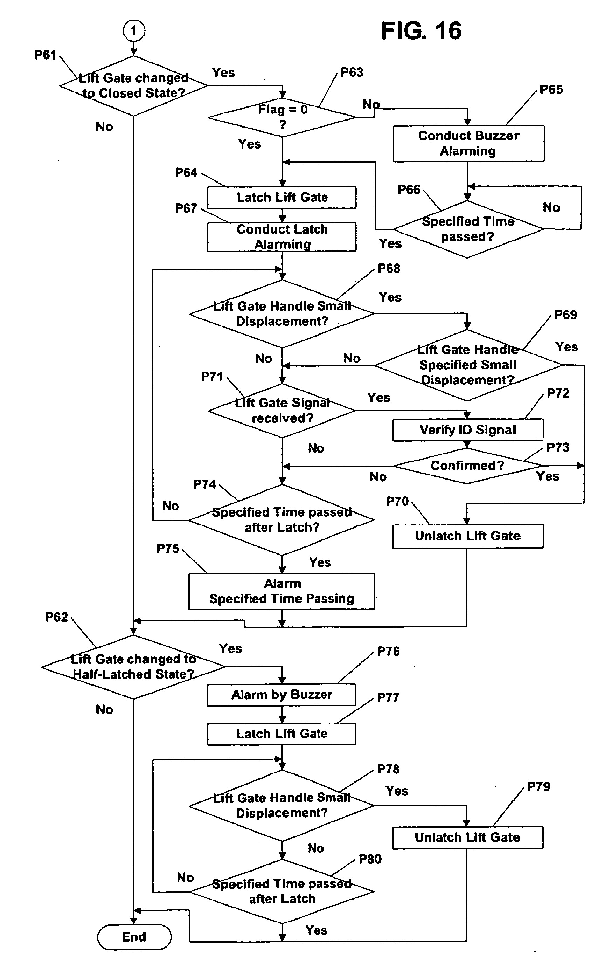

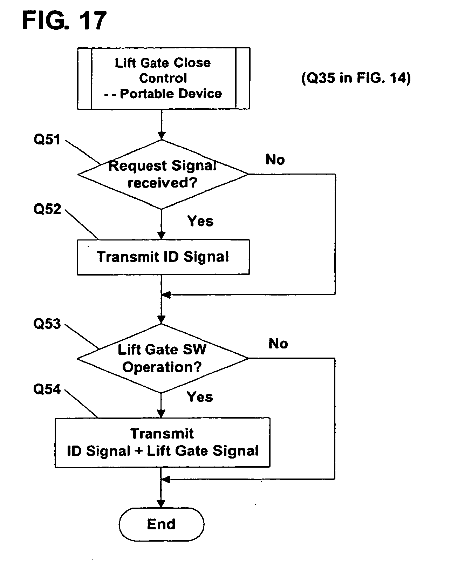

The details of the step P47 in FIG. 13 (the step Q35 in FIG. 14) will be described referring to FIGS. 15 and 16 (substantially corresponding to processing on the side of the portable device K in FIG. 17). First, a flag is set to binary values (such as 0 or low level or 1 or high level) through steps P51 - P60 in FIG. 15. The flag is reset to 0 when the lift gate 6 is changed from its closed state to its open state. And when it is determined that the portable device K is located only outside the vehicle or located inside and outside the vehicle, the flag is set to 0. While it is determined that the portable device K is located only inside the vehicle, the flag is set to 1.

Herein, at first, the flag is reset to 0 according to the left gate 6 being in the closed state in the step P51. Then, in step P52, the signal intensity of the signals that are transmitted to the vehicle-inside transmission areas A1, B1, D and/or E and the vehicle-outside transmission area C are adjusted to be weaker than the standard value. This preferably is to prevent the vehicle-inside transmission area (especially, the transmission area D) from expanding to the vehicle rear, and/or to prevent the vehicle-outside transmission area C from expanding into the vehicle cabin when the lift gate 6 is opened. Then, in step P53, the request signal is transmitted to the above-described transmission areas (herein, although the request signal is transmitted once, it is preferable that it is transmitted periodically to inside and/or outside the vehicle).

After the step P53, it is determined whether or not the ID signal transmitted by the portable device K located inside the vehicle is received within the specified period of time in step P54. When the determination is YES in the step P54, it is determined whether the verification is confirmed or not in step P55. When the determination is YES in the step P55, the flag is set to 1 in step P56 based on the recognition of the portable device K being located in the vehicle cabin. Herein, the processing on the side of the portable device K that substantially corresponds to the steps P53, P54 are steps Q51, Q52 in FIG. 15.

After the step P56, when the determination is NO in the step P54 (the portable device K is not detected inside the vehicle), or when the determination is NO in the step P55, the control sequence proceeds to step S57, where it is determined whether the flag is 0 or not. When the determination is NO in the step P57, namely, the portable device K is detected inside the vehicle, it is determined whether or not the ID signal transmitted by the portable device K located outside the vehicle is received within the specified (predetermined or predeterminable) period of time in step P58. When the determination is YES in the step P58, it is determined whether the verification is confirmed or not in step P59. When the determination is YES in the step P59, the flag is reset to 0 in step P60. Accordingly, in the case where the control sequence goes through the step P60, it is detected that the portable device K is located inside and outside the vehicle respectively.

After the step P60, when the determination is YES in the step P57, when the determination is NO in the step P58, and when the determination is NO in the step P59, the control sequence proceeds to step P61 in FIG. 16 respectively. It is determined whether the lift gate 6 is changed to its closed state or not in the step P61. When the determination is NO in the step P61, it is determined whether the lift gate 6 is in the half-latched state or not in step P62. When it is NO (the lift gate 6 is in the closed state), the control ends.

When the determination is YES in the step P61, it is determined whether the flag is 0 or not in step P63. When the determination is YES in the step P63, i.e., the portable device K is at least located outside the vehicle, the lift gate 6 is latched in step P64 and then the alarming of the lift gate 6 being latched is conducted in step P67 (for example, operating the buzzer, flashing the rear-turn-signal lamps).

In the case where the determination is NO in the step P63, i.e., the portable device K is located inside the vehicle, if the lift gate 6 is latched, there is a concern that the portable device K is locked up in the vehicle cabin. Accordingly, in this case, after the alarming is conducted in step P65 and then it is confirmed that the specified (predetermined or predeterminable) period of time has passed from the alarming in step P66, the lift gate 6 is latched in step P64. This specified (predetermined or predeterminable) period of time in the step P66 can be set to a proper time (e.g., 10 - 15 sec) that may be necessary to take the portable device K out of the vehicle cabin.

After the step P67, processing of steps P68 through P75 are conducted. These processing are to unlatch the lift gate 6 to be reopened in a short period of time. Namely, it is determined whether the small displacement of the lift gate handle 6a occurs or not in step P68. When the determination is YES in the step P68, it is determined in step P69 whether a specified (predetermined or predeterminable) small operation of the lift gate handle 6a is conducted or not to confirm the reopening request of the lift gate 6. This specified (predetermined or predeterminable) small operation of the lift gate handle 6a preferably is different from the operation for the small displacement of the lift gate handle 6a that is conducted to open the lift gate 6 that has been in the closed state for a long period of time. This specified (predetermined or predeterminable) small operation may be detected if the small displacement of the lift gate handle 6a occurs specified (predetermined or predeterminable) plural times (e.g., three times) for a specified (predetermined or predeterminable) period of time (e.g., three seconds), and/or if the small-displacement state of the left gate handle 6a continues for a specified (predetermined or predeterminable) period of time (e.g., three seconds). When the determination is YES in the step P69, the lift gate 6 is unlatched in step P70.

When the determination is NO in the steps P68 or P69, it is determined whether the lift gate signal from the portable device K is received or not (whether the lift gate switch 27 is operated or not) in step P71. When the determination is YES in the step P71, the ID signal verification is conducted in step P72 and then it is determined whether the verification is confirmed or not in step S73. When the determination is YES in the step P73, the control sequence proceeds to the step P70, where the lift gate 6 is unlatched. Herein, the processing on the side of the portable device K corresponding to the step P71 are steps Q53, Q54 in FIG. 17.

When the determination is NO in the steps P73 or P71, it is determined in step P74 whether or not the specified (predetermined or predeterminable) period of time has passed from the lift gate 6 is latched. When the determination is NO in the step P74, the control returns to the step P68. Also, when the determination is YES in the step P74, the passenger is alarmed in step P75 that the specified (predetermined or predeterminable) period of time (e.g., 10 sec) has passed from the latch and so the latch operation in the step P70 is not done any more (e.g., by the buzzer operation, the flashing of the exterior or interior lamps and/or the voice guide). After the steps P70 or P75, the control sequence proceeds to the step P62.

When the determination is YES in the step P62, namely the lift gate 6 is in the half-latched state, the buzzer alarming is done in step P76 and then the lift gate 6 is latched to make sure the closed situation in step P77. Then, it is determined whether the small displacement or operation of the lift gate handle 6a occurs or not in step P78. When the determination is YES in the step P78, the lift gate 6 is unlatched in step P79. Also, when the determination is NO in the step P78, it is determined in step P80 whether or not the specified (predetermined or predeterminable) period of time (e.g., 5 sec) has passed from the lift gate 6 is latched. Herein, when the portable device K is not detected to be located inside and outside the vehicle, the lift gate 6 may be latched in the specified (predetermined or predeterminable) period of time after the alarming (the same processing as the steps P65, P66 to P64).

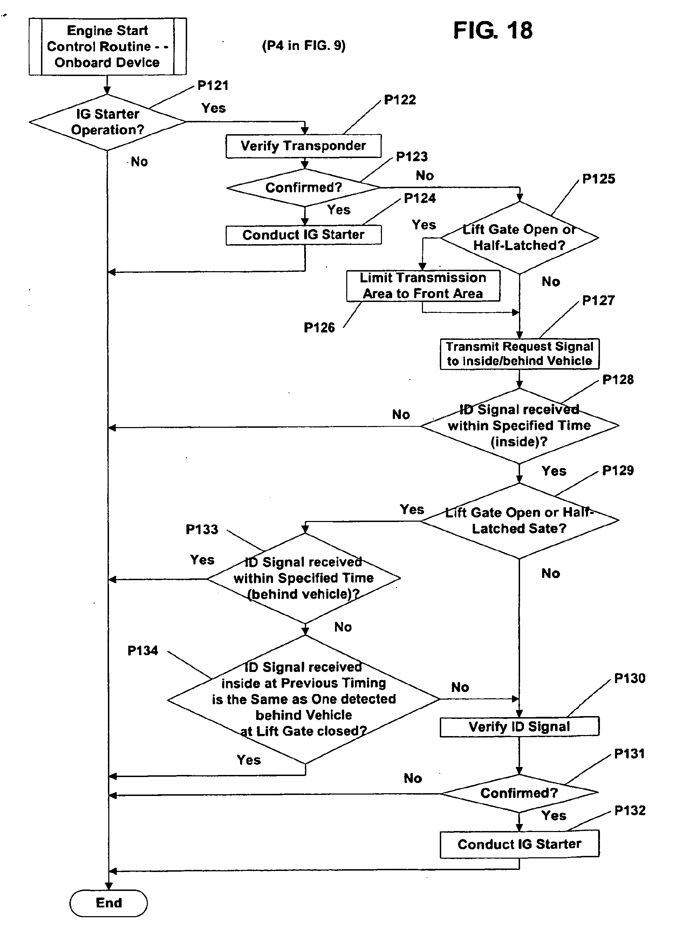

FIG. 18 shows the details of the engine start control in the step P4 in FIG. 9. The step Q4 in FIG. 10 corresponding to this step includes control contents that the ID signal is transmitted according to the receiving of the request signal. First, it is determined whether or not the IG starter operation is done in step P121 in FIG. 18. When the determination is YES in the step P121, the transponder verification is conducted so as to correspond to the IG starter operation by the mechanical key 28 in step P122. Then, it is determined whether the verification is confirmed in step P123. When the determination is YES in the step P123, the IG starter control is conducted in step P124, thereby starting the engine.

When the determination is NO in the step P123, it is determined whether the lift gate 6 is in the open state or in the half-latched state in step P125. When the lift gate 6 is in the closed state (fully closed) and thus the determination is NO in the step P125, the request signal is transmitted to the vehicle-inside transmission areas A1, B1, D and/or E and the vehicle-outside transmission area C in step P127. When the determination is YES in the step P125, the transmission area is limited to the front area(s) A1, B1 and/or E in step P126, and then the control sequence proceeds to step P127. This processing in the step P126 is to prevent the transmission area for the vehicle inside from expanding to the vehicle rear (vehicle outside) passing through the rear opening portion 5.

After the step P127, it is determined in step P128 whether the ID signal from the portable device K is received within the specified (predetermined or predeterminable) period of time after the request signal is transmitted.

When the determination is YES in the step P128, it is determined whether the lift gate 6 is in the open state or in the half-latched state in step P129 (the substantially same determination as the step P125). When the determination is NO in the step P129, namely the lift gate 6 is in the closed state, the verification of the ID signal from the portable device K located inside the vehicle is conducted in step P130 and then it is determined whether the verification is confirmed or not in step P131. When the determination is YES in the step P131, the IG starter control is carried out in step P132 and thereby the engine starts.

When the determination is YES in the step P129, the lift gate 6 is in the closed state. Then, it is determined in step P133 whether or not the ID signal from the portable device K located substantially behind or close to the rear of the vehicle is received within the specified (predetermined or predeterminable) period of time after the request signal is transmitted. When the determination is YES in the step P133, there is a high likelihood that the portable device K located substantially behind or close to the rear of the vehicle is erroneously determined to be located inside the vehicle. Accordingly, the control ends without the engine start control executed and an alarm is preferably issued.

When the determination is NO in the step P133, it is determined in step P134 whether or not the ID signal information that was received inside the vehicle at the previous timing (e.g., less than three seconds earlier) is the same as the one from the portable device K that is detected substantially behind or close to the rear of the vehicle within the specified (predetermined or predeterminable) period of time (e.g., within 10 seconds) after the lift gate 6 has been closed. When the determination is YES in the step P134, there is a high likelihood that the portable device K located substantially behind the vehicle is erroneously determined to be located inside the vehicle. Accordingly, the control ends without the engine start control executed. When the determination is NO in the step P134, the processing after the step 134 are conducted, giving priority to the IG starter operation (when the verification is confirmed, the engine start is carried out). When the determination is NO in the step P128, or the determination is YES in the step P133, the control ends without the engine start operation and an alarm is preferably issued. In the above-described engine start control, the engine start control is not executed except the steps P124, P132. Herein, after the engine is stared, the transmission area can be expanded to the areas A1, B1, D and/or E, not being limited to the front vehicle-inside area.

Herein, the control steps in FIG 18 may be modified as follows. In the step P126, the signal intensity to the transmission area C located behind the vehicle may be weak and/or the transmission direction thereof may be changed to upward (for preventing the transmission area C from expanding to the vehicle inside). Also, the signal intensity to the transmission areas A1, B1, D and/or E located inside the vehicle may be weak and/or the transmission direction thereof may be changed to forward (for preventing these transmission areas from expanding to the vehicle rear).

Further, the request signal may be transmitted at any of the following timings, so that the verification in the step P130 in FIG. 18 can be conducted before other steps (the execution of the engine start control following the step P123). Preferably, the first timing is when the ACC is turned ON from the IG OFF state (equipments are ON by the IGACC' s ON operation); the second one is when the IGACC is turned ON; the third one is when every 3 sec has passed in the ACC ON state; the fourth one is when every 60 sec has passed; the fifth one is when any of the doors 1-4 and 6 is opened from the closed state; and/or the sixth one is all doors 1 - 4 and 6 are closed from the any door's open state.

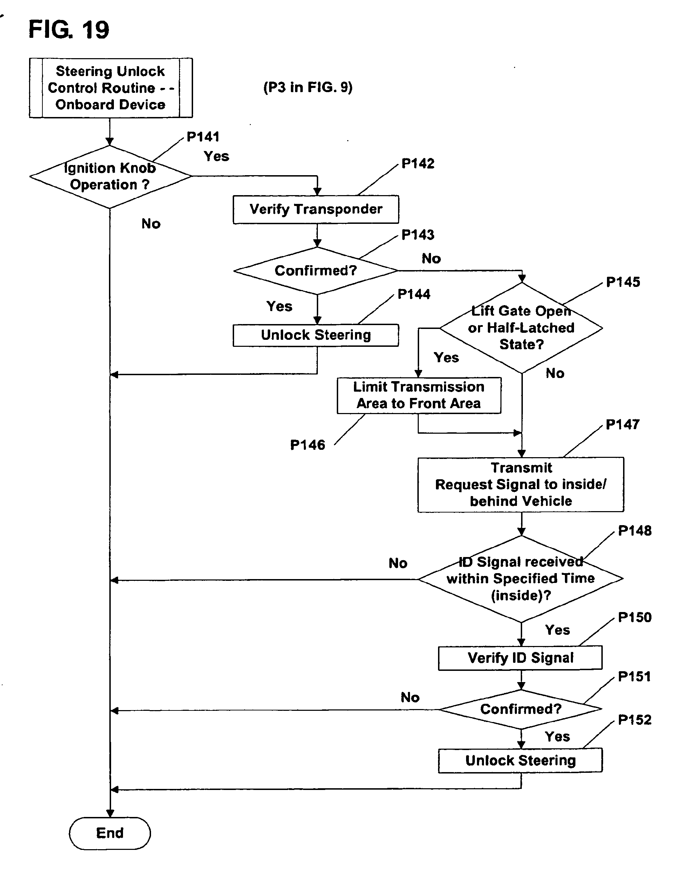

FIG. 19 shows the details of the steering lock control in the step P3 in FIG. 9. The step Q3 in FIG. 10 corresponding to this step includes control contents that the ID signal is transmitted according to the receiving of the request signal.

The steering lock control in FIG. 19 substantially corresponds to the engine start control in FIG. 18, and therefore only different steps will be described. First, in step P141 corresponding to the step P121 in FIG. 18, it is determined whether or not the ignition knob is operated instead of the determination of the IG starter operation. Also, in steps P144, P152, which correspond to the steps P124, P132 in FIG. 18, the control to unlock the steering is executed instead of the IG starter control.

The steering lock control of FIG. 19 preferably does not have the steps P129, P133 and P134 of FIG. 18, and herein, the steering is kept in the locked state as long as the steering unlock control is executed in the steps P144 or P152. Also, the steps P145, P146 may be omitted. In this case, the request signal may be transmitted substantially only to inside the vehicle in the step P147 and thus the received ID signal in the step P148 is only from the portable device K located inside the vehicle. The conditions for unlocking the steering can be easier than that for permitting the engine start in terms of risks of the vehicle theft. However, the conditions may be set to be tougher which is at the same level as the engine start.

Also, the request signal may be transmitted at any of the following timings, so that the verification in the step P150 in FIG. 19 can be conducted before other steps (the execution of the steering lock control following the step P151). Namely, the first timing is when the engine is in the stop state and any door is opened; the second one is when the engine is in the stop state and all doors are closed; and the third one is when the ACC is in the OFF state and IG is turned OFF.

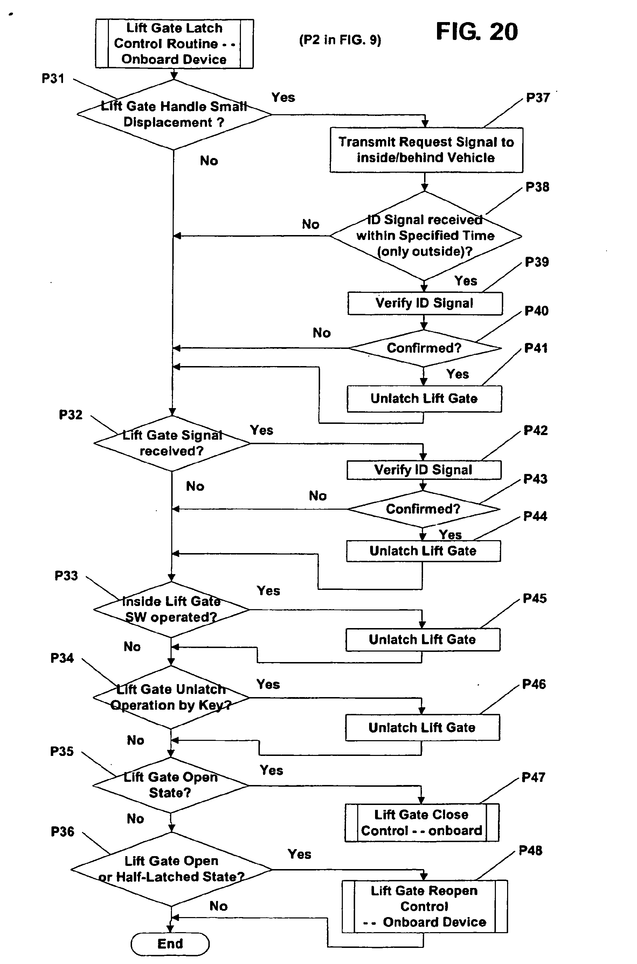

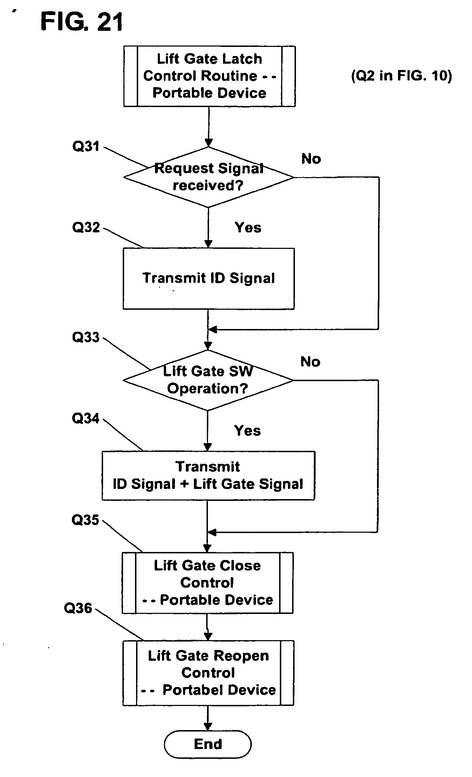

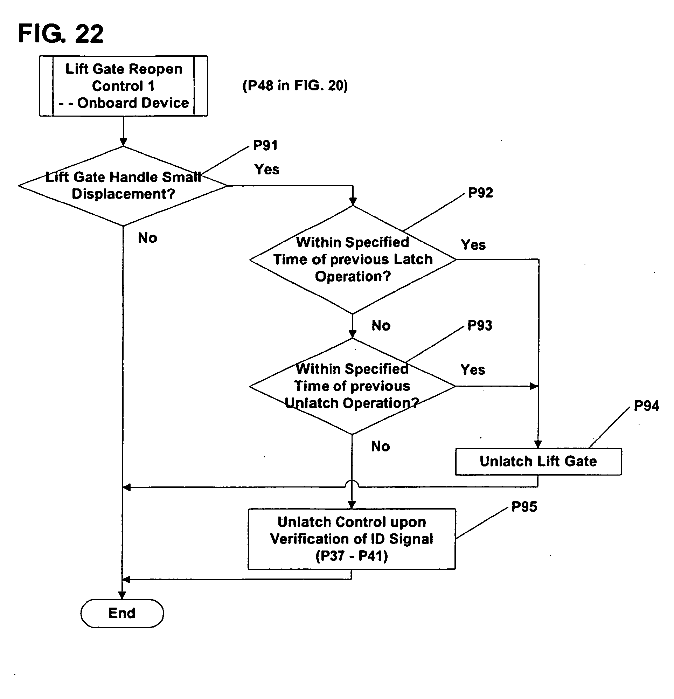

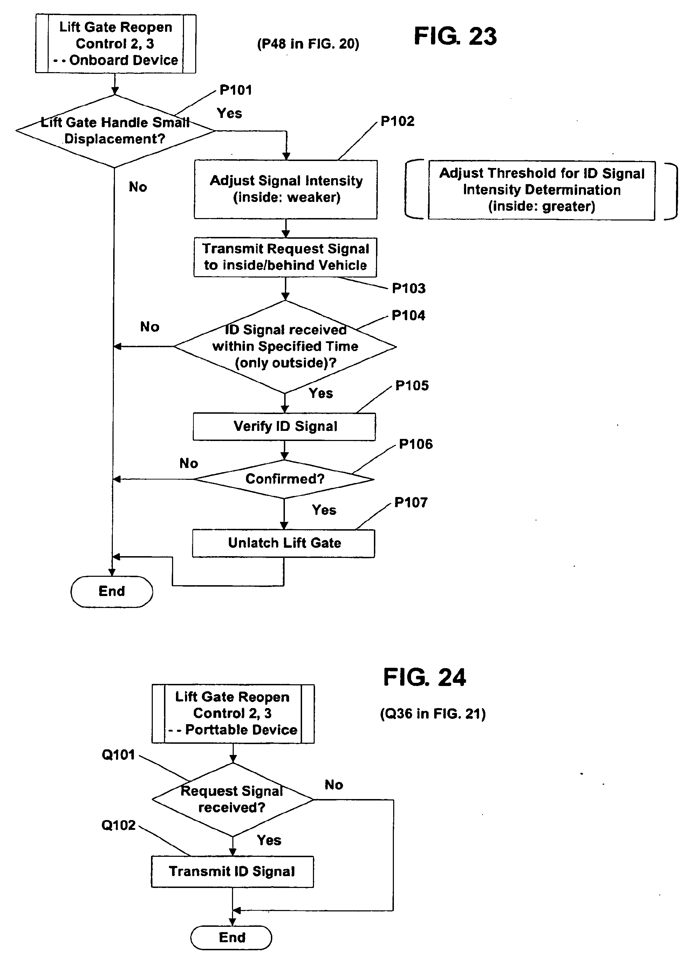

Next, hereinafter another embodiment of the present invention will be described referring to FIGS. 20 through 25. The present embodiment provides additional function of surely unlatching the specified door in the half-latched door from the outside of the vehicle.

FIG. 20 shows a flowchart showing preferred details of the step P2 of FIG. 9 of the present embodiment. The control steps shown in FIG. 20 is the same as the control steps of the previous embodiment shown in FIG. 13 except steps P36 and P48. Accordingly, the descriptions of the same steps are omitted here.

Meanwhile, FIG. 21 shows a flowchart showing preferred details of the step Q2 of FIG. 10 of the present embodiment. The control steps shown in FIG. 21 is the substantially same as the control steps of the previous embodiment shown in FIG. 14 except step Q36. Accordingly, the descriptions of the same steps are omitted here.

In FIG. 20, when the determination is NO in the step P35 or after the step P47, it is determined whether the lift gate 6 is in the open state or in the half-latched state in step P36. When the determination is YES in the step P36, the unlatch control is executed in step P48, which will be described later. When the determination is NO in the step P36 or after the step P48, the control ends.

Next, the details of the step P48 in FIG. 20 will be described referring to FIG. 22. The steps shown in FIG. 22 are processing to unlatch the lift gate 6 in the open state or in the half-latched state without using the ID signal from the portable device K, so the lift gate is allowed to be opened again. First, it is determined whether the (preferably small) displacement of the lift gate handle 6a occurs or not in step P91. When the determination is YES in the step P91, it is determined whether or not the occurrence of the small displacement happens within a specified (predetermined or predeterminable) period of time of the previous latch operation in step P92. When the determination is YES in the step P92, the lift gate 6 is unlatched in step P94. Herein, the specified (predetermined or predeterminable) period of time in the step P92 can be set properly considering the following cases (for example, about 10 sec). Namely, after the lift gate has been closed, the passenger may notice its half-latched state or having forgot to load or unload baggage and the like, wherein the passenger may stay near the vehicle for a certain (predetermined or predeterminable) period of time for the purpose of making sure the safety from the vehicle theft or the like.

When the determination is NO in the step P92, it is determined whether or not the occurrence of the small displacement happens within a specified (predetermined or predeterminable) period of time of the previous unlatch operation in step P93. This determination is likewise for the passengers' notice of the half-latched state of the lift gate or the passenger's notice of having forgotten loading or unloading. Herein, the specified (predetermined or predeterminable) period of time in the step P93 is a time after the lift gate 6 is opened, so it may be set to be longer than that in the step P92 (for example, about 60 sec). When the determination is YES in the step P93, the lift gate 6 is unlatched in step P94.

When the determination is NO in the step P93, the unlatch control is executed upon verification of the ID signal in step P95. The control in the step P95 preferably is the substantially same as that in the steps P 37 - P41 in FIG. 20. Namely, the portable device K transmits the ID signal only for the request signal transmitted to inside the vehicle, and when the verifications is confirmed, the lift gate is unlatched. Otherwise, the control preferably ends without the unlatch operation.

FIG. 23 shows process of the step P48 in FIG. 20 like FIG. 22, which is according to another exemplified control of FIG. 22. The control content at the side of the portable device K corresponding to the exemplified control of FIG. 23 is the response of the ID signal to the request signal as shown in FIG. 24. In the exemplified control of FIG. 22, the unlatch control is also carried out under the condition that it is determined that the portable device K is located only substantially behind or close to the rear of the vehicle. Namely, it is determined whether the (preferably small) displacement of the lift gate handle 6a occurs or not in step P101. When the determination is YES in the step P101, the signal intensity of the signal(s) from the antennas 3a, 3b, 3d and/or 3e to provide the vehicle-inside transmission areas A1, B1, D and E are adjusted to be weaker than the standard value in step P102. This is to prevent the vehicle-inside transmission areas A1, B1, D and/or E, especially the transmission area D, from expanding to the vehicle outside through an open gap formed by the lift gate 6 in the half-latched state. Then, in step P103, the request signal is transmitted to the above-described transmission areas A1, B1, D and E and the vehicle rear transmission area C. The control of the portable device K corresponding to this request signal transmitted is steps Q101, Q102 in FIG. 24. Herein, the above-described processing of weakening the signal intensity preferably may be only applied to the vehicle-inside transmission area D.

After the step P103, it is determined whether or not the ID signal transmitted by the portable device K responsive to the request signal transmitted to outside the vehicle is received within the specified (predetermined or predeterminable) period of time in step P104. Namely, it is determined whether or not only the ID signal from the portable device K located the vehicle-outside transmission area C the vehicle is received. When the determination is YES in the step P104, the ID signal is verified in step P105 and then it is determined whether the verification is confirmed or not in step P106. When the determination is YES in the step P106, namely, the verification is confirmed, the lift gate 6 is unlatched in step P107. When the determinations are NO in the steps P101, P104 or P104, the control preferably ends without of the unlatch operation of the lift gate 6.

Herein, as a modification of the step P102, the ID signal from the portable device K located in the vehicle-inside transmission areas A1, B1, D and/or E is configured so as not to be received by using the sensing threshold that is greater than the standard value, instead of or in addition to the above-described adjustment of the weakened signal intensity to provide the vehicle-inside transmission areas A1, B1, D and/or E.

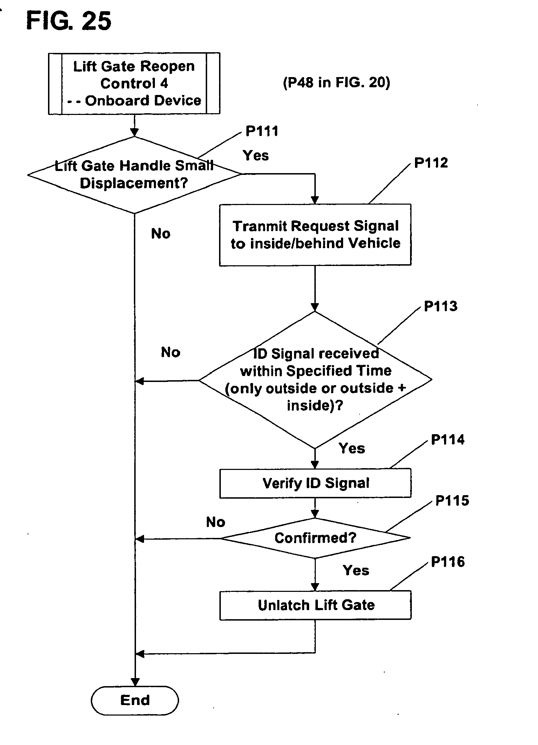

FIG. 25 shows processing of the step P48 in FIG. 20 like FIGS. 22 and 23, which is according to another exemplified control of FIG. 23. In the exemplified control of FIG. 25, the unlatch control is carried out at least under the condition that it is determined that the portable device K is located substantially behind or close to the rear of the vehicle. Namely, even if the portable device K is detected to be in the vehicle, the condition for allowing the unlatch of the lift gate 6 is satisfied as long as the portable device K is located substantially behind or close to the rear of the vehicle. This control considers a situation where a plurality of portable devices K are provided and one is located inside the vehicle with the other outside the vehicle.

In the exemplified control shown in FIG. 25, it is determined whether the small displacement of the lift gate handle 6a occurs or not in step P111. When the determination is YES in the step P111, the request signal is transmitted to the transmission areas A1, B1, D and E and the vehicle rear transmission area C in step P112. The control of the portable device K corresponding to this request signal transmitted is steps Q101, Q102 in FIG. 24.

After the step P112, it is determined in step P113 whether within the specified (predetermined or predeterminable) period of time, the ID signal transmitted by the portable device K responsive to the request signal transmitted to outside the vehicle is received, or the ID signal transmitted by the portable device K responsive to the request signal transmitted to outside and inside the vehicle is received. Namely, it is determined whether or not the portable device K is located in the transmission area C substantially behind or close to the rear of the vehicle. When the determination is YES in the step P113, the ID signal from the portable device K responsive to the request signal transmitted to outside the vehicle is verified in step P114 and then it is determined whether the verification is confirmed or not in step P115. When the determination is YES in the step P115, namely, the verification is confirmed, the lift gate 6 is unlatched in step P116. When the determinations are NO in the steps P111, P113 or P115, the control preferably ends without of the unlatch operation of the lift gate 6.

The present invention should not be limited to the above-described embodiments, and any other modifications and improvements can be applied within the scope of the present invention as defined in the claims. For example, the request switch to request the unlatch of the lift gate 6 may be configured as a different type of switch which can produce the request signal just e.g. by touching the lift gate handle 6a (e.g., a pressure sensitive sensor, a capacity sensor), or e.g. by pushing a switch provided at a portion other than the lift gate handle 6a (e.g., a portion of the lift gate 6 that is near the lift gate handle 6a). Namely, any switches or operable members can be adopted which could unlatch the lift gate 6 easily with a relatively smaller operational force, compared with the normal operation in which the lift gate is unlatched only by the mechanical force applied by the passenger.

Also, the lift gate 6 may adopt a lateral-opening style, and the specified door in the present invention as defined in the claims may be a lateral-opening-type or vertical-opening-type of rear door (a side door for a cargo room located at the vehicle rear) or a slide door, instead of the above-described lift gate. Also, the specified door may be a front side door for a seat other than the driver seat (e.g., a front side door for an access to the cargo room of a vehicle, such as a home delivery vehicle).

Also, an additional electromagnetic lock mechanism may be provided to the electromagnetic latch mechanism. In this case, the lock mechanism can be configured such that the lock is automatically done after the latch and the unlock is automatically before the unlatch. The objects of the present invention should also include what are described implicitly.

Further, although the above-described embodiments use the electromagnetic latch mechanism 10 that latch and unlatch the door, a conventional mechanical latch mechanism that latches the door mechanically (automatically) when the door is closed may be adopted for latching the door. Namely, both the electromagnetic latch mechanism and the mechanical latch mechanism are provided, and latching the door done by the mechanical latch mechanism, while unlatching the door is done by the electromagnetic latch mechanism. This modification can perform the function of the present invention as defined in the claims as well.

## Claims

1. A smart entry system for a vehicle (V), comprising:
a latch mechanism (10) provided at a specified door (6) other than a driver-seat door (1);
a request switch (6a) provided at the specified door (6);
an onboard transmitter (7a, 7b, 7c, 7e) operative to transmit a request signal when the request switch (6a) is operated;
a portable device (K) operative to transmit an ID signal when receiving the request signal; and
an onboard receiver (8) operative to receive the ID signal from the portable device (K), **characterised in that**
when said specified door (6) is closed, said latch mechanism (10) is operated so as to unlatch the specified door (6) upon verification with the ID signal received by said onboard receiver (8) according to an operation of said request switch (6a), and when the specified door (6) is closed from an open state thereof, said latch mechanism (10) is operated so as to latch the specified door (6) whether said request switch (6a) is operated or not or the verification with said ID signal is confirmed or not.

2. The smart entry system for a vehicle (V) of claim 1, wherein the specified door is a back door (6) to open and close a rear opening portion (5) formed at a vehicle rear.

3. The smart entry system for a vehicle (V) of one of the preceding claims, further comprising a lock mechanism to lock and unlock a door (1; 2; 3; 4) other than said specified door (6), a door request switch (1b; 2b) for the door that is different from said request switch (6a) provided at the specified door (6), wherein the lock mechanism is operated so as to lock and unlock the door (1; 2; 3; 4) upon verification with the ID signal.

4. A smart entry system for a vehicle (V) of one of the preceding claims, wherein said latch mechanism (10) provided at the specified door (6) is an electromagnetic latch mechanism, and the electromagnetic latch mechanism (10) is controlled by a control device (UV) in such a manner that when said specified door (6) is closed, said latch mechanism (10) is operated so as to unlatch the specified door (6) upon verification with the ID signal received by said onboard receiver (8) according to the operation of said request switch (6a), and when the specified door (6) is closed from the open state thereof, said latch mechanism (10) is operated so as to latch the specified door (6) whether the request switch (6a) is operated or not or the verification with said ID signal is confirmed or not.

5. A smart entry system for a vehicle (V) of claim 4, wherein said control device (UV) is configured so as to detect whether said portable device (K) is located in a vehicle cabin or not by transmitting the request signal periodically to inside the vehicle and using the verification with the ID signal when the specified door (6) is in the open state, and to operate the electromagnetic latch mechanism (10) to latch the specified door (6) when it is detected that the portable device (K) is not located in the vehicle cabin.

6. A smart entry system for a vehicle (V) of claim 5, wherein said control device (UV) is configured so as to operate the electromagnetic latch mechanism (10) to latch the specified door (6) after or at least partly concurrently to an alarming when it is detected that the portable device (K) is located in the vehicle cabin when the specified door (6) is in the open state.

7. A smart entry system for a vehicle (V) of claim 4, 5 or 6, wherein said control device (UV) is configured
so as to detect whether said portable device (K) is located outside the vehicle or not by transmitting the request signal periodically to outside the vehicle and using the verification with the ID signal when the specified door (6) is in the open state, and
to operate the electromagnetic latch mechanism (10) to latch the specified door(6) when it is detected that the portable device (K) is located outside the vehicle.

8. A smart entry system for a vehicle (V) of one of the preceding claims 4 to 7, wherein said control device (UV) is configured so as to operate the electromagnetic latch mechanism (10) to latch the specified door (6) after an alarming when it is not detected that the portable device (K) is located outside the vehicle when the specified door (6) is in the open state.

9. A smart entry system for a vehicle (V) of one of the preceding claims, wherein said onboard transmitter (7a, 7b, 7c, 7e) is configured to transmit the request signal periodically to outside the vehicle when the specified door (6) is in the open state is located at a specified portion that is not at but near the specified door (6).

10. The smart entry system for a vehicle (V) of one of the preceding claims 4 through 9, wherein the specified door (6) is a back door to open and close a rear opening portion (5) formed at a vehicle rear.

11. The smart entry system for a vehicle (V) of one of the preceding claims 4 through 10, wherein said operation of the request switch (6a) is configured so as to be a small displacement of a door handle (6a) provided at the specified door (6).

12. A smart entry system for a vehicle (V) of one of the preceding claims, wherein said latch mechanism (10) provided at the specified door (6) is an electromagnetic latch mechanism, and
the electromagnetic latch mechanism (10) is controlled by a control device (UV) in such a manner that
when said specified door (6) is closed, said onboard transmitter (7a, 7b, 7c, 7e) transmits the request signal to inside and outside the vehicle when said request switch (6a) is operated and said latch mechanism (10) is operated so as to unlatch the specified door (6) upon verification with the ID signal received by said onboard receiver (8) that is transmitted by said portable device (K) only when responding to the request signal transmitted to outside the vehicle, when the specified door (6) is closed from the open state thereof, said latch mechanism (10) is operated so as to latch the specified door (6), and
when the specified door (6) is in a half-latched state, the electromagnetic latch mechanism (10) is operated so as to unlatch the specified door (6) according to the operation of said request switch (6a) without the verification with the ID signal.

13. A smart entry system for a vehicle (V) of claim 12, wherein said electromagnetic latch mechanism (10) is controlled by said control device (UV) in such a manner that said door-unlatch operation without the verification with the ID signal by the electromagnetic latch mechanism (10) is prohibited when a specified time has passed after the specified door (6) is latched.

14. A smart entry system for a vehicle (V) of one of the preceding claims, wherein said latch mechanism (10) provided at the specified door (6) is an electromagnetic latch mechanism, and
the electromagnetic latch mechanism (10) is controlled by a control device (UV) in such a manner that
when said specified door (6) is closed, said onboard transmitter (7a, 7b, 7c, 7e) transmits the request signal to inside and outside the vehicle when said request switch (6a) is operated and said latch mechanism (10) is operated so as to unlatch the specified door (6) upon verification with the ID signal received by said onboard receiver (8) that is transmitted by said portable device (K) only when responding to the request signal transmitted to outside the vehicle, when the specified door (6) is closed from the open state thereof, said latch mechanism (10) is operated so as to latch the specified door (6), and
when the specified door (6) is in a half-latched state, said request signal transmitted by said onboard transmitter (7a, 7b, 7c, 7e) is changed such that a signal intensity thereof that is transmitted to inside the vehicle becomes weak and the electromagnetic latch mechanism (10) is operated so as to unlatch the specified door (6) upon verification with the ID signal received by said onboard receiver (8) that is transmitted by said portable device (K) only when responding to the request signal transmitted to outside the vehicle.

15. A smart entry system for a vehicle (V) of one of the preceding claims, wherein said latch mechanism (10) provided at the specified door (6) is an electromagnetic latch mechanism, and
the electromagnetic latch mechanism (10) is controlled by a control device (UV) in such a manner that
when said specified door (6) is closed, said onboard transmitter (7a, 7b, 7c, 7e) transmits the request signal to inside and outside the vehicle when said request switch (6a) is operated and said latch mechanism (10) is operated so as to unlatch the specified door (6) upon verification with the ID signal received by said onboard receiver (8) that is transmitted by said portable device (K) only when responding to the request signal transmitted to outside the vehicle, when the specified door (6) is closed from the open state thereof, said latch mechanism (10) is operated so as to latch the specified door (6), and
when the specified door (6) is in a half-latched state, a reception sensitivity of said onboard receiver (8) is changed such that the reception sensitivity for the ID signal that is transmitted by the portable device (K) when receiving the request signal that is transmitted to inside the vehicle becomes weak and the electromagnetic latch mechanism (10) is operated so as to unlatch the specified door (6) upon verification with the ID signal received by said onboard receiver (8) that is transmitted by said portable device (K) only when responding to the request signal transmitted to outside the vehicle.

16. A smart entry system for a vehicle (V) of one of the preceding claims,
wherein said latch mechanism (10) provided at the specified door (6) is an electromagnetic latch mechanism, and
the electromagnetic latch mechanism (10) is controlled by a control device (UV) in such a manner that
when said specified door (6) is closed, said onboard transmitter (7a, 7b, 7c, 7e) transmits the request signal to inside and outside the vehicle when said request switch (6a) is operated and said latch mechanism (10) is operated so as to unlatch the specified door (6) upon verification with the ID signal received by said onboard receiver (8) that is transmitted by said portable device (K) only when responding to the request signal transmitted to outside the vehicle, when the specified door (6) is closed from the open state thereof, said latch mechanism (10) is operated so as to latch the specified door (6), and
when the specified door (6) is in a half-latched state, said onboard transmitter (7a, 7b, 7c, 7e) transmits the request signal to inside and outside the vehicle when said request switch (6a) is operated and said latch mechanism (10) is operated so as to unlatch the specified door (6) upon verification with the ID signal received by said onboard receiver (8) that is transmitted by said portable device (K) when responding to at least the request signal transmitted to outside the vehicle.

17. A control method for a smart entry system for a vehicle (V) having a latch mechanism (10) provided at a specified door (6) other than a driver-seat door (1), the control method comprising the following steps:
transmitting a request signal when a request switch (6a) provided at the specified door (6) is operated by means of an onboard transmitter (7a, 7b, 7c, 7e);
transmitting an ID signal when receiving the request signal by means of a portable device (K); and
receiving the ID signal from the portable device (K) by means of an onboard receiver (8),
wherein when said specified door (6) is closed, said latch mechanism (10) is operated so as to unlatch the specified door (6) upon verification with the ID signal received by said onboard receiver (8) according to an operation of said request switch (6a), and when the specified door (6) is closed from an open state thereof, said latch mechanism (10) is operated so as to latch the specified door (6) whether said request switch (6a) is operated or not or the verification with said ID signal is confirmed or not.

## Patentansprüche

1. Intelligentes Zugangssystem für ein Fahrzeug (V), umfassend:
einen Einklink- bzw. Einrastmechanismus bzw. Verriegelungsmechanismus (10), welcher an einer bestimmten Tür (6) verschieden von einer Fahrersitztür (1) vorgesehen bzw. zur Verfügung gestellt ist;
einen Anforderungsschalter (6a), welcher an der bestimmten Tür (6) vorgesehen ist;
einen an Bord befindlichen Transmitter bzw. Sender (7a, 7b, 7c, 7e), welcher operativ ist, um ein Anforderungssignal zu senden bzw. zu übertragen, wenn der Anforderungsschalter (6a) betätigt ist bzw. wird;
eine tragbare Vorrichtung (K), welche operativ ist, um ein ID-Signal zu übertragen, wenn das Anforderungssignal empfangen ist bzw. wird; und
einen an Bord befindlichen Empfänger (8), welcher operativ ist, um das ID-Signal von der tragbaren Vorrichtung (K) zu empfangen, **dadurch gekennzeichnet, daß**
wenn die bestimmte Tür (6) geschlossen ist, der Einrastmechanismus (10) betätigt ist bzw. wird, um die bestimmte Tür (6) bei bzw. nach einer Verifizierung mit dem ID-Signal, welches durch den an Bord befindlichen Empfänger (8) empfangen ist, gemäß einer Betätigung des Anforderungsschalters (6a) zu entriegeln, und wenn die bestimmte Tür (6) von einem offenen Zustand davon geschlossen ist bzw. wird, der Einrastmechanismus (10) betätigt ist bzw. wird, um die bestimmte Tür (6) einzurasten bzw. zu verriegeln, unabhängig davon, ob der Anforderungsschalter (6a) betätigt ist oder nicht oder die Verifizierung mit dem ID-Signal bestätigt ist oder nicht.

2. Intelligentes Zugangssystem für ein Fahrzeug (V) nach Anspruch 1, wobei die bestimmte Tür eine rückwärtige Tür (6) ist, um einen rückwärtigen Öffnungsabschnitt (5) zu öffnen und zu schließen, welcher an einer Fahrzeugrückseite ausgebildet ist.

3. Intelligentes Zugangssystem für ein Fahrzeug (V) nach einem der vorangehenden Ansprüche, weiterhin umfassend einen Verriegelungsmechanismus, um eine Tür (1; 2; 3; 4) verschieden von der bestimmten Tür (6) zu verriegeln und zu entriegeln, einen Türanforderungsschalter (1b; 2b) für die Tür, welcher von dem Anforderungsschalter (6a) verschieden ist, welcher an der bestimmten Tür (6) vorgesehen ist, wobei der Verriegelungsmechanismus betätigt ist bzw. wird, um die Tür (1; 2; 3; 4) bei bzw. nach einer Verifizierung mit dem ID-Signal zu verriegeln und zu entriegeln.

4. Intelligentes Zugangssystem für ein Fahrzeug (V) nach einem der vorangehenden Ansprüche, wobei der Einrastmechanismus (10), welcher an der bestimmten Tür (6) vorgesehen ist, ein elektromagnetischer Einrastmechanismus ist, und der elektromagnetische Einrastmechanismus (10) durch eine Regel- bzw. Steuervorrichtung (UV) in einer derartigen Weise geregelt bzw. gesteuert ist, daß, wenn die bestimmte Tür (6) geschlossen ist, der Einrastmechanismus (10) betätigt ist bzw. wird, um die bestimmte Tür (6) bei bzw. nach einer Verifizierung mit dem ID-Signal, welches durch den an Bord befindlichen Empfänger (8) empfangen ist, gemäß der Betätigung des Anforderungsschalters (6a) zu entriegeln, und wenn die bestimmte Tür (6) von dem offenen Zustand davon geschlossen ist, der Einrastmechanismus (10) betätigt ist, um die bestimmte Tür (6) unabhängig davon einzurasten, ob der Anforderungsschalter (6a) betätigt ist oder nicht oder die Verifikation mit dem ID-Signal bestätigt ist oder nicht.

5. Intelligentes Zugangssystem für ein Fahrzeug (V) nach Anspruch 4, wobei die Regel- bzw. Steuervorrichtung (UV) so konfiguriert ist, um zu detektieren, ob die tragbare Vorrichtung (K) in einer Fahrzeugkabine angeordnet ist oder nicht, durch ein periodisches Übertragen des Anforderungssignals in das Innere des Fahrzeugs und ein Verwenden der Verifikation mit dem ID-Signal, wenn sich die bestimmte Tür (6) in dem offenen Zustand befindet, und um den elektromagnetischen Einrastmechanismus (10) zu betätigen, um die bestimmte Tür (6) einzurasten, wenn detektiert ist bzw. wird, daß die tragbare Vorrichtung (K) nicht in der Fahrzeugkabine bzw. dem Fahrgastraum angeordnet ist.

6. Intelligentes Zugangssystem für ein Fahrzeug (V) nach Anspruch 5, wobei die Regel- bzw. Steuervorrichtung (UV) konfiguriert ist, um den elektromagnetischen Einrastmechanismus (10) zu betätigen, um die bestimmte Tür (6) nach oder wenigstens gleichzeitig mit einem Alarmieren einzurasten, wenn detektiert ist bzw. wird, daß die tragbare Vorrichtung (K) in der Fahrzeugkabine angeordnet ist, wenn sich die bestimmte Tür (6) in dem offenen Zustand befindet.

7. Intelligentes Zugangssystem für ein Fahrzeug (V) nach Anspruch 4, 5 oder 6, wobei die Regel- bzw. Steuervorrichtung (UV) konfiguriert ist, um zu detektieren, ob die tragbare Vorrichtung (K) außerhalb des Fahrzeugs angeordnet ist oder nicht, indem das Anforderungssignal periodisch nach außerhalb des Fahrzeugs übertragen ist bzw. wird und die Verifikation mit dem ID-Signal verwendet ist bzw. wird, wenn sich die bestimmte Tür (6) in dem offenen Zustand befindet, und um den elektromagnetischen Einrastmechanismus (10) zu betätigen, um die bestimmte Tür (6) einzurasten, wenn detektiert ist bzw. wird, daß die tragbare Vorrichtung (K) außerhalb des Fahrzeugs angeordnet ist.

8. Intelligentes Zugangssystem für ein Fahrzeug (V) nach einem der vorangehenden Ansprüche 4 bis 7, wobei die Regel- bzw. Steuervorrichtung (UV) konfiguriert ist, um den elektromagnetischen Einrastmechanismus (10) zu betätigen, um die bestimmte Tür (6) nach einem Alarmieren einzurasten, wenn nicht detektiert ist, daß die tragbare Vorrichtung (K) außerhalb des Fahrzeugs angeordnet ist, wenn sich die bestimmte Tür (6) in dem offenen Zustand befindet.

9. Intelligentes Zugangssystem für ein Fahrzeug (V) nach einem der vorangehenden Ansprüche, wobei der an Bord befindliche Sender (7a, 7b, 7c, 7e) konfiguriert ist, um das Anforderungssignal periodisch nach außerhalb des Fahrzeugs zu übertragen, wenn sich die bestimmte Tür (6) in dem offenen Zustand befindet, und zwar an einem bestimmten Abschnitt angeordnet, welcher nicht bei, sondern nahe der bestimmten Tür (6) liegt.

10. Intelligentes Zugangssystem für ein Fahrzeug (V) nach einem der vorangehenden Ansprüche 4 bis 9, wobei die bestimmte Tür (6) eine rückwärtige Tür ist, um einen rückwärtigen Öffnungsabschnitt (5) zu öffnen und zu schließen, welcher an einer Fahrzeugrückseite ausgebildet ist.

11. Intelligentes Zugangssystem für ein Fahrzeug (V) nach einem der vorangehenden Ansprüche 4 bis 10, wobei die Betätigung des Anforderungsschalters (6a) konfiguriert ist, um eine geringe Verlagerung eines Türgriffs (6a) zu sein, welcher an der bestimmten Tür (6) vorgesehen bzw. zur Verfügung gestellt ist.

12. Intelligentes Zugangssystem für ein Fahrzeug (V) nach einem der vorangehenden Ansprüche, wobei der Einrastmechanismus (10), welcher an der bestimmten Tür (6) zur Verfügung gestellt ist, ein elektromagnetischer Einrastmechanismus ist, und
der elektromagnetische Einrastmechanismus (10) durch eine Regel- bzw. Steuervorrichtung (UV) in einer derartigen Weise geregelt bzw. gesteuert ist, daß wenn die bestimmte Tür (6) geschlossen ist, der an Bord befindliche Sender (7a, 7b, 7c, 7e) das Anforderungssignal in das Innere und nach außerhalb des Fahrzeugs überträgt, wenn der Anforderungsschalter (6a) betätigt ist bzw. wird und der Einrastmechanismus (10) betätigt ist bzw. wird, um die bestimmte Tür (6) bei bzw. nach einer Verifizierung mit dem ID-Signal zu entriegeln, welches durch den an Bord befindlichen Empfänger (8) empfangen ist, welches durch die tragbare Vorrichtung (K) nur übertragen ist bzw. wird, wenn auf das Anforderungssignal geantwortet ist bzw. wird, welches nach außerhalb des Fahrzeugs übertragen ist bzw. wird, wenn die bestimmte Tür (6) von dem offenen Zustand davon geschlossen ist bzw. wird, der Einrastmechanismus (10) betätigt ist, um die bestimmte Tür (6) einzurasten, und wenn sich die Tür (6) in einem halb eingerasteten Zustand befindet, der elektromagnetische Einlaßmechanismus (10) betätigt ist bzw. wird, um die bestimmte Tür (6) gemäß der Betätigung des Anforderungsschalters (6a) ohne die Verifizierung mit dem ID-Signal zu entriegeln.

13. Intelligentes Zugangssystem für ein Fahrzeug (V) nach Anspruch 12, wobei der elektromagnetische Einrastmechanismus (10) durch die Regel- bzw. Steuervorrichtung (UV) in einer derartigen Weise geregelt bzw. gesteuert ist, daß der Tür-Entriegelungsvorgang ohne die Verifizierung mit dem ID-Signal durch den elektromagnetischen Einrastmechanismus (10) verhindert ist bzw. wird, wenn eine bestimmte Zeit verstrichen ist, nachdem die bestimmte Tür (6) eingerastet ist.

14. Intelligentes Zugangssystem für ein Fahrzeug (V) nach einem der vorangehenden Ansprüche, wobei der Einrastmechanismus (10), welcher an der bestimmten Tür (6) zur Verfügung gestellt ist, ein elektromagnetischer Einrastmechanismus ist, und der elektromagnetische Einrastmechanismus (10) durch eine Regel- bzw. Steuervorrichtung (UV) in einer derartigen Weise geregelt bzw. gesteuert ist, daß wenn die bestimmte Tür (6) geschlossen ist, der an Bord befindliche Sender (7a, 7b, 7c, 7e) das Anforderungssignal nach innerhalb und außerhalb des Fahrzeugs überträgt, wenn der Anforderungsschalter (6a) betätigt ist bzw. wird, und der Entriegelungsmechanismus (10) betätigt ist, um die bestimmte Tür (6) bei bzw. nach einer Verifizierung mit dem ID-Signal zu entriegeln, welches durch den an Bord empfindlichen Empfänger (8) empfangen ist, welches durch die tragbare Vorrichtung (K) nur übertragen ist bzw. wird, wenn auf das Anforderungssignal geantwortet wird, welches nach außerhalb des Fahrzeugs übertragen ist, wenn die bestimmte Tür (6) von dem offenen Zustand davon geschlossen ist bzw. wird, der Entriegelungsmechanismus (10) betätigt ist bzw. wird, um die bestimmte Tür (6) einzurasten, und
wenn sich die bestimmte Tür (6) in einem halb eingerasteten Zustand befindet, das Anforderungssignal, welches durch den an Bord befindlichen Sender (7a, 7b, 7c, 7e) übertragen ist bzw. wird, derart geändert ist, daß eine Signalintensität davon, welche in das Innere des Fahrzeugs übertragen ist bzw. wird, schwach wird und der elektromagnetische Einrastmechanismus (10) betätigt ist, um die bestimmte Tür (6) nach bzw. bei einer Verifizierung mit dem ID-Signal zu entriegeln, welches durch den an Bord befindlichen Empfänger (8) empfangen ist, welches durch die tragbare Vorrichtung (K) nur übertragen ist, wenn auf das Anforderungssignal geantwortet wird, welches nach außerhalb des Fahrzeugs übertragen ist bzw. wird.

15. Intelligentes Zugangssystem für ein Fahrzeug (V) nach einem der vorangehenden Ansprüche, wobei der Einrastmechanismus (10), welcher an der bestimmten Tür (6) zur Verfügung gestellt ist, ein elektromagnetischer Einrastmechanismus ist, und
der elektromagnetische Einrastmechanismus (10) durch eine Regel- bzw. Steuervorrichtung (UV) in einer derartigen Weise geregelt bzw. gesteuert ist, daß wenn die bestimmte Tür (6) geschlossen ist, der an Bord befindliche Sender (7a, 7b, 7c, 7e) das Anforderungssignal nach innerhalb und außerhalb des Fahrzeugs überträgt, wenn der Anforderungsschalter (6a) betätigt ist bzw. wird, und der Entriegelungsmechanismus (10) betätigt ist bzw. wird, um die bestimmte Tür (6) bei bzw. nach einer Verifizierung mit dem ID-Signal zu entriegeln, welches durch den an Bord empfindlichen Empfänger (8) empfangen ist, welches durch die tragbare Vorrichtung (K) nur übertragen ist bzw. wird, wenn auf das Anforderungssignal geantwortet wird, welches nach außerhalb des Fahrzeugs übertragen ist, wenn die bestimmte Tür (6) von dem offenen Zustand davon geschlossen ist bzw. wird, der Entriegelungsmechanismus (10) betätigt ist bzw. wird, um die bestimmte Tür (6) einzurasten, und
wenn sich die Tür (6) in einem halb eingerasteten Zustand befindet, eine Empfangsempfindlichkeit des an Bord befindlichen Empfängers (8) derart geändert ist bzw. wird, daß die Empfangsempfindlichkeit für das ID-Signal, welches durch die tragbare Vorrichtung (K) übertragen ist, wenn das Anforderungssignal empfangen ist, welches in das Innere des Fahrzeugs übertragen ist bzw. wird, schwach wird und der elektromagnetische Einrastmechanismus (10) betätigt ist, um die bestimmte Tür (6) bei bzw. nach einer Verifizierung mit dem ID-Signal zu entriegeln, welches durch den an Bord befindlichen Empfänger (8) empfangen ist, welches durch die tragbare Vorrichtung (K) nur übertragen ist bzw. wird, wenn auf das Anforderungssignal geantwortet wird, welches nach außerhalb des Fahrzeugs übertragen ist bzw. wird.

16. Intelligentes Zugangssystem für ein Fahrzeug (V) nach einem der vorangehenden Ansprüche, wobei der Einrastmechanismus (10), welcher an der bestimmten Tür (6) zur Verfügung gestellt ist, ein elektromagnetischer Einrastmechanismus ist, und
der elektromagnetische Einrastmechanismus (10) durch eine Regel- bzw. Steuervorrichtung (UV) in einer derartigen Weise geregelt bzw. gesteuert ist, daß wenn die bestimmte Tür (6) geschlossen ist, der an Bord befindliche Sender (7a, 7b, 7c, 7e) das Anforderungssignal nach innerhalb und außerhalb des Fahrzeugs überträgt, wenn der Anforderungsschalter (6a) betätigt ist und wird, und der Entriegelungsmechanismus (10) betätigt ist bzw. wird, um die bestimmte Tür (6) bei bzw. nach einer Verifizierung mit dem ID-Signal zu entriegeln, welches durch den an Bord empfindlichen Empfänger (8) empfangen ist, welches durch die tragbare Vorrichtung (K) nur übertragen ist bzw. wird, wenn auf das Anforderungssignal geantwortet wird, welches nach außerhalb des Fahrzeugs übertragen ist, wenn die bestimmte Tür (6) von dem offenen Zustand davon geschlossen ist bzw. wird, der Entriegelungsmechanismus (10) betätigt ist bzw. wird, um die bestimmte Tür (6) einzurasten, und
wenn sich die bestimmte Tür (6) in einem halb eingerasteten Zustand befindet, der an Bord befindliche Sender (7a, 7b, 7c, 7e) das Anforderungssignal nach innerhalb und außerhalb des Fahrzeugs überträgt, wenn der Anforderungsschalter (6a) betätigt ist, und der Einrastmechanismus (10) betätigt ist bzw. wird, um die bestimmte Tür (6) bei bzw. nach einer Verifizierung mit dem ID-Signal zu entriegeln, welches durch den an Bord befindlichen Empfänger (8) empfangen ist, welches durch die tragbare Vorrichtung (K) übertragen ist bzw. wird, wenn auf wenigstens das Anforderungssignal geantwortet wird, welches nach außerhalb des Fahrzeugs übertragen ist bzw. wird.

17. Steuerungs- bzw. Regelverfahren für ein intelligentes Zugangssystem für ein Fahrzeug (V), welches einen Einrastmechanismus (10) aufweist, welcher an einer bestimmten Tür (6) verschieden von einer Fahrersitztür (1) zur Verfügung gestellt bzw. vorgesehen wird, wobei das Regel- bzw. Steuerungsverfahren die folgenden Schritte umfaßt:
Übertragen bzw. Senden eines Anforderungssignals, wenn ein Anforderungsschalter (6a), welcher an der bestimmten Tür (6) zur Verfügung gestellt wird, mittels eines an Bord befindlichen Transmitters bzw. Senders (7a, 7b, 7c, 7e) betätigt wird;
Übertragen eines ID-Signals, wenn das Anforderungssignal empfangen wird, mittels einer tragbaren Vorrichtung (K); und
Empfangen des ID-Signals von der tragbaren Vorrichtung (K) mittels eines an Bord empfindlichen Empfängers (8),
wobei, wenn die bestimmte Tür (6) geschlossen wird, der Einrastmechanismus (10) betätigt wird, um die bestimmte Tür (6) bei bzw. nach einer Verifizierung mit dem ID-Signal, welches durch den an Bord befindlichen Empfänger (8) empfangen wird, gemäß einer Betätigung des Anforderungsschalters (6a) zu entriegeln, und wenn die bestimmte Tür (6) von einem offenen Zustand davon geschlossen wird, der Einrastmechanismus (10) betätigt wird, um die bestimmte Tür (6) unabhängig davon einzurasten bzw. zu verriegeln, ob der Anforderungsschalter (6a) betätigt wird oder nicht oder die Verifizierung mit dem ID-Signal bestätigt wird oder nicht.

## Revendications

1. Système d'accès intelligent pour un véhicule (V), comprenant :
- un mécanisme de verrouillage (10) prévu sur une portière spécifiée (6), autre qu'une portière de place de conducteur (1) ;
- un interrupteur d'interrogation (6a) prévu sur la portière spécifiée (6) ;
- un transmetteur embarqué (7a, 7b, 7c, 7e) agissant pour transmettre un signal d'interrogation lorsque l'interrupteur d'interrogation (6a) est actionné ;
- un dispositif portable (K) agissant pour transmettre un signal ID lorsque le signal d'interrogation est reçu ; et
- un récepteur embarqué (8) agissant pour transmettre le signal ID depuis le dispositif portable (K), **caractérisé en ce que**, lorsque ladite portière spécifiée (6) est fermée, ledit mécanisme de verrouillage (10) est actionné de manière à déverrouiller la portière spécifiée (6) suite à une vérification avec le signal ID reçu par ledit récepteur embarqué (8) conformément à un actionnement dudit interrupteur d'interrogation (6a), et lorsque la portière spécifiée (6) est fermée depuis un état ouvert de celle-ci, ledit mécanisme de verrouillage (10) est actionné de manière à verrouiller la portière spécifiée (6), que ledit interrupteur d'interrogation (6a) soit actionné ou non, ou que la vérification avec ledit signal ID soit confirmée ou non.

2. Système d'accès intelligent pour un véhicule (V) selon la revendication 1, dans lequel la portière spécifiée est une porte arrière (6) pour ouvrir et fermer une partie d'ouverture arrière (5) formée sur un arrière de véhicule.

3. Système d'accès intelligent pour un véhicule (V) selon l'une des revendications précédentes, comprenant en outre un mécanisme de verrouillage pour verrouiller et déverrouiller une portière (1 ; 2 ; 3 ; 4) autre que ladite portière spécifiée (6), un interrupteur d'interrogation de portière (1b ; 2b) pour la portière qui est différent dudit interrupteur d'interrogation (6a) prévu sur la portière spécifiée (6), et dans lequel le mécanisme de verrouillage est actionné de manière à verrouiller et à déverrouiller la portière (1 ; 2 ; 3 ; 4) suite à une vérification avec le signal ID.

4. Système d'accès intelligent pour un véhicule (V) selon l'une des revendications précédentes, dans lequel ledit mécanisme de verrouillage (10) prévu sur la portière spécifiée (6) est un mécanisme de verrouillage électromagnétique, et dans lequel le mécanisme de verrouillage électromagnétique (10) est contrôlé par un dispositif de contrôle (UV) d'une manière telle que, lorsque ladite portière spécifiée (6) est fermée, ledit mécanisme de verrouillage (10) est actionné de manière à déverrouiller la portière spécifiée (6) suite à une vérification avec le signal ID reçu par ledit récepteur embarqué (8) conformément à l'actionnement dudit interrupteur d'interrogation (6a), et lorsque ladite portière spécifiée (6) est fermée depuis un état ouvert de celle-ci, ledit mécanisme de verrouillage (10) est actionné de manière à verrouiller la portière spécifiée (6), que ledit interrupteur d'interrogation (6a) soit actionné ou non, ou que la vérification avec ledit signal ID soit confirmée ou non.

5. Système d'accès intelligent pour un véhicule (V) selon la revendication 4, dans lequel ledit dispositif de contrôle (UV) est configuré de manière à détecter si ledit dispositif portable (K) est placé ou non dans un habitacle de véhicule par la transmission périodique du signal d'interrogation vers l'intérieur du véhicule et par l'utilisation de la vérification avec le signal ID si la portière spécifiée (6) est dans l'état ouvert, et de manière à actionner le mécanisme de verrouillage électromagnétique (10) afin de verrouiller la portière spécifiée (6) s'il est détecté que le dispositif portable (K) n'est pas placé dans l'habitacle de véhicule.

6. Système d'accès intelligent pour un véhicule (V) selon la revendication 5, dans lequel ledit dispositif de contrôle (UV) est configuré de manière à actionner le mécanisme de verrouillage électromagnétique (10) afin de verrouiller la portière spécifiée (6) après ou au moins en partie simultanément à une émission d'alarme s'il est détecté que le dispositif portable (K) est placé dans l'habitacle de véhicule lorsque la portière spécifiée (6) est dans l'état ouvert.

7. Système d'accès intelligent pour un véhicule (V) selon la revendication 4, 5 ou 6, dans lequel ledit dispositif de contrôle (UV) est configuré :
- de manière à détecter si ledit dispositif portable (K) est placé ou non à l'extérieur du véhicule par la transmission périodique du signal d'interrogation vers l'extérieur du véhicule et par l'utilisation de la vérification avec le signal ID si la portière spécifiée (6) est dans l'état ouvert ; et
- de manière à actionner le mécanisme de verrouillage électromagnétique (10) afin de verrouiller la portière spécifiée (6) s'il est détecté que le dispositif portable (K) est placé à l'extérieur du véhicule.

8. Système d'accès intelligent pour un véhicule (V) selon l'une des revendications précédentes 4 à 7, dans lequel ledit dispositif de contrôle (UV) est configuré de manière à actionner le mécanisme de verrouillage électromagnétique (10) afin de verrouiller la portière spécifiée (6) après une émission d'alarme s'il n'est pas détecté que le dispositif portable (K) est placé à l'extérieur du véhicule lorsque la portière spécifiée (6) est dans l'état ouvert.

9. Système d'accès intelligent pour un véhicule (V) selon l'une des revendications précédentes, dans lequel ledit transmetteur embarqué (7a, 7b, 7c, 7e) est configuré pour transmettre périodiquement le signal d'interrogation vers l'extérieur du véhicule lorsque la portière spécifiée (6) est dans l'état ouvert, et est localisé sur une partie spécifiée qui n'est pas sur, mais à proximité de la portière spécifiée (6).

10. Système d'accès intelligent pour un véhicule (V) selon l'une des revendications précédentes 4 à 9, dans lequel la portière spécifiée (6) est une porte arrière pour ouvrir et fermer une partie d'ouverture arrière (5) formée à l'arrière du véhicule.

11. Système d'accès intelligent pour un véhicule (V) selon l'une des revendications précédentes 4 à 10; dans lequel ledit actionnement de l'interrupteur d'interrogation (6a) est configuré de manière à être un petit déplacement d'une poignée de portière (6a) prévu sur la portière spécifiée (6).

12. Système d'accès intelligent pour un véhicule (V) selon l'une des revendications précédentes, dans lequel :
- ledit mécanisme de verrouillage (10) prévu sur la portière spécifiée (6) est un mécanisme de verrouillage électromagnétique ; et
- le mécanisme de verrouillage électromagnétique (10) est contrôlé par un dispositif de contrôle (UV) d'une manière telle que :
- lorsque ladite portière spécifiée (6) est fermée, ledit transmetteur embarqué (7a, 7b, 7c, 7e) transmet le signal d'interrogation vers l'intérieur et l'extérieur du véhicule lorsque ledit interrupteur d'interrogation (6a) est actionné, et ledit mécanisme de verrouillage (10) est actionné de manière à déverrouiller la portière spécifiée (6) suite à une vérification avec le signal ID reçu par ledit récepteur embarqué (8) qui est transmis par ledit dispositif portable (K) seulement pendant la réponse au signal d'interrogation transmis vers l'extérieur du véhicule, et lorsque la portière spécifiée (6) est fermée depuis l'état ouvert de celle-ci, ledit mécanisme de verrouillage (10) est actionné de manière à verrouiller la portière spécifiée (6) ; et
- lorsque la portière spécifiée (6) est dans un état verrouillé à moitié, le mécanisme de verrouillage électromagnétique (10) est actionné de manière à déverrouiller la portière spécifiée (6) conformément à l'actionnement dudit interrupteur d'interrogation (6a) sans la vérification avec le signal ID.

13. Système d'accès intelligent pour un véhicule (V) selon la revendication 12, dans lequel ledit mécanisme de verrouillage électromagnétique (10) est contrôlé par le dispositif de contrôle (UV) d'une manière telle que ledit actionnement de déverrouillage de portière sans la vérification avec le signal ID par le mécanisme de verrouillage électromagnétique (10) est empêché lorsqu'un temps spécifié s'est écoulé après que la portière spécifiée (6) soit verrouillée.

14. Système d'accès intelligent pour un véhicule (V) selon l'une des revendications précédentes, dans lequel :
- ledit mécanisme de verrouillage (10) prévu sur la portière spécifiée (6) est un mécanisme de verrouillage électromagnétique ; et
- le mécanisme de verrouillage électromagnétique (10) est contrôlé par un dispositif de contrôle (UV) d'une manière telle que :
- lorsque ladite portière spécifiée (6) est fermée, ledit transmetteur embarqué (7a, 7b, 7c, 7e) transmet le signal d'interrogation vers l'intérieur et l'extérieur du véhicule lorsque ledit interrupteur d'interrogation (6a) est actionné, et ledit mécanisme de verrouillage (10) est actionné de manière à déverrouiller la portière spécifiée (6) suite à une vérification avec le signal ID reçu par ledit récepteur embarqué (8) qui est transmis par ledit dispositif portable (K) seulement pendant la réponse au signal d'interrogation transmis vers l'extérieur du véhicule, et lorsque la portière spécifiée (6) est fermée depuis l'état ouvert de celle-ci, ledit mécanisme de verrouillage (10) est actionné de manière à verrouiller la portière spécifiée (6) ; et
- lorsque la portière spécifiée (6) est dans un état verrouillé à moitié, ledit signal d'interrogation transmis par ledit transmetteur embarqué (7a, 7b, 7c, 7e) est modifié de telle sorte qu'une intensité de signal de celui-ci qui est transmise vers l'intérieur du véhicule s'affaiblit et que le mécanisme de verrouillage électromagnétique (10) est actionné de manière à déverrouiller la portière spécifiée (6) suite à une vérification avec le signal ID reçu par ledit récepteur embarqué (8), lequel est transmis par ledit dispositif portable (K) seulement pendant la réponse au signal d'interrogation transmis vers l'extérieur du véhicule.

15. Système d'accès intelligent pour un véhicule (V) selon l'une des revendications précédentes, dans lequel:
- ledit mécanisme de verrouillage (10) prévu sur la portière spécifiée (6) est un mécanisme de verrouillage électromagnétique ; et
- le mécanisme de verrouillage électromagnétique (10) est contrôlé par un dispositif de contrôle (UV) d'une manière telle que :
- lorsque ladite portière spécifiée (6) est fermée, ledit transmetteur embarqué (7a, 7b, 7c, 7e) transmet le signal d'interrogation vers l'intérieur et l'extérieur du véhicule lorsque ledit interrupteur d'interrogation (6a) est actionné, et ledit mécanisme de verrouillage (10) est actionné de manière à déverrouiller la portière spécifiée (6) suite à une vérification avec le signal ID reçu par ledit récepteur embarqué (8) qui est transmis par ledit dispositif portable (K) seulement pendant la réponse au signal d'interrogation transmis vers l'extérieur du véhicule, et lorsque la portière spécifiée (6) est fermée depuis l'état ouvert de celle-ci, ledit mécanisme de verrouillage (10) est actionné de manière à verrouiller la portière spécifiée (6) ; et
- lorsque la portière spécifiée (6) est dans un état verrouillé à moitié, une sensibilité de réception dudit récepteur embarqué (8) est modifiée de telle sorte que la sensibilité de réception pour le signal ID qui est transmis par le dispositif portable (K) pendant la réception du signal d'interrogation qui est transmis vers l'intérieur du véhicule, s'affaiblit et que le mécanisme de verrouillage électromagnétique (10) est actionné de manière à déverrouiller la portière spécifiée (6) suite à une vérification avec le signal ID reçu par ledit récepteur embarqué (8), lequel est transmis par ledit dispositif portable (K) seulement pendant la réponse au signal d'interrogation transmis vers l'extérieur du véhicule.

16. Système d'accès intelligent pour un véhicule (V) selon l'une des revendications précédentes, dans lequel :
- ledit mécanisme de verrouillage (10) prévu sur la portière spécifiée (6) est un mécanisme de verrouillage électromagnétique ; et
- le mécanisme de verrouillage électromagnétique (10) est contrôlé par un dispositif de contrôle (UV) d'une manière telle que :
- lorsque ladite portière spécifiée (6) est fermée, ledit transmetteur embarqué (7a, 7b, 7c, 7e) transmet le signal d'interrogation vers l'intérieur et l'extérieur du véhicule lorsque ledit interrupteur d'interrogation (6a) est actionné, et ledit mécanisme de verrouillage (10) est actionné de manière à déverrouiller la portière spécifiée (6) suite à une vérification avec le signal ID reçu par ledit récepteur embarqué (8) qui est transmis par ledit dispositif portable (K) seulement pendant la réponse au signal d'interrogation transmis vers l'extérieur du véhicule, et lorsque la portière spécifiée (6) est fermée depuis l'état ouvert de celle-ci, ledit mécanisme de verrouillage (10) est actionné de manière à verrouiller la portière spécifiée (6) ; et
- lorsque la portière spécifiée (6) est dans un état verrouillé à moitié, ledit transmetteur embarqué (7a, 7b, 7c, 7e) transmet le signal d'interrogation vers l'intérieur et l'extérieur du véhicule lorsque ledit interrupteur d'interrogation (6a) est actionné, et ledit mécanisme de verrouillage (10) est actionné de manière à déverrouiller la portière spécifiée (6) suite à une vérification avec le signal ID reçu par ledit récepteur embarqué (8) qui est transmis par ledit dispositif portable (K) pendant la réponse au moins au signal d'interrogation transmis vers l'extérieur du véhicule.

17. Méthode de contrôle pour un système d'accès intelligent pour un véhicule (V) ayant un mécanisme de verrouillage (10) prévu sur une portière spécifiée (6), autre qu'une portière de place de conducteur (1), la méthode de contrôle comprenant les étapes suivantes :
- transmission d'un signal d'interrogation lorsqu'un interrupteur d'interrogation (6a) prévu sur la portière spécifiée (6) est actionné au moyen d'un transmetteur embarqué (7a, 7b, 7c, 7e) ;
- transmission d'un signal ID lorsque le signal d'interrogation est reçu au moyen d'un dispositif portable (K) ; et
- réception du signal ID depuis le dispositif portable (K) au moyen d'un récepteur embarqué (8),
dans laquelle ladite portière spécifiée (6) est fermée, ledit mécanisme de verrouillage (10) est actionné est actionné de manière à déverrouiller la portière spécifiée (6) suite à une vérification avec le signal ID reçu par ledit récepteur embarqué (8) conformément à un actionnement dudit interrupteur d'interrogation (6a), et lorsque ladite portière spécifiée (6) est fermée depuis un état ouvert de celle-ci, ledit mécanisme de verrouillage (10) est actionné de manière à verrouiller la portière spécifiée (6), que ledit interrupteur d'interrogation (6a) soit actionné ou non, ou que la vérification avec ledit signal ID soit confirmée ou non.
